(19) Europäisches Patentamt
European Patent Office
Office européen des brevets

(11) EP 4 186 939 A1

(12) **EUROPEAN PATENT APPLICATION**
published in accordance with Art. 153(4) EPC

(43) Date of publication:
**31.05.2023 Bulletin 2023/22**

(21) Application number: **21847244.7**

(22) Date of filing: **20.07.2021**

(51) International Patent Classification (IPC):
***C08G 59/24*** *(2006.01)* ***C08L 33/04*** *(2006.01)*
***C08L 63/00*** *(2006.01)*

(52) Cooperative Patent Classification (CPC):
**C08G 59/24; C08L 33/04; C08L 63/00**

(86) International application number:
**PCT/JP2021/027202**

(87) International publication number:
**WO 2022/019309 (27.01.2022 Gazette 2022/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.07.2020 JP 2020124738**

(71) Applicant: **Nippon Shokubai Co., Ltd.**
**Osaka-shi, Osaka 541-0043 (JP)**

(72) Inventors:
- **YASUMURA Kazunari**
  **Suita-shi, Osaka 564-0034 (JP)**
- **NAMIMOTO Fuyuko**
  **Suita-shi, Osaka 564-0034 (JP)**

(74) Representative: **Lederer & Keller Patentanwälte Partnerschaft mbB**
**Unsöldstraße 2**
**80538 München (DE)**

(54) **RESIN COMPOSITION**

(57) Provided is a novel epoxy composition (modified epoxy resin). The composition comprises an acrylic resin and an epoxy resin comprising an alicyclic epoxy resin.

EP 4 186 939 A1

## Description

TECHNICAL FIELD

The present invention relates to a novel composition (resin composition) and the like.

BACKGROUND ART

Epoxy resins are used in various applications such as adhesives, paints, and electrical and electronic materials.
For example, Patent Literature 1 (JP-A2014-152236) discloses a specific epoxy resin composition comprising an epoxy resin (A), a microcapsule-type latent curing agent (B), and a nitrogen-containing heterocyclic compound (C).

CITATION LIST

Patent Literature

Patent Literature 1: JP-A2014-152236

SUMMARY OF INVENTION

TECHNICAL PROBLEM

An object of the present invention is to provide a novel composition (resin composition) and the like.

SOLUTION TO PROBLEM

As mentioned above, epoxy resins are used in various applications because of their advantages in terms of heat resistance, adhesiveness, and other properties.
Under such circumstances, the present inventors explored the possibility of modifying an epoxy resin or altering its properties (imparting additional physical properties to the epoxy resin) by blending an epoxy resin with an acrylic resin.
However, epoxy resin compositions containing an acrylic resin were found to be highly viscous and have room for improvement.
The present inventors have intensely sought to find an appropriate combination of acrylic resins and epoxy resins in the composition, and have found that the use of a specific epoxy resin allows the composition to have a low viscosity.
The present inventors have further obtained various new findings as described later and made further investigations to complete the present invention.
That is, the present invention relates to the following.

[1] A composition (epoxy resin composition, modified epoxy resin, first composition) comprising an acrylic resin and an epoxy resin comprising an alicyclic epoxy resin.
[2] The composition according to the above [1], wherein the acrylic resin has acid groups and reactive groups for reacting with the acid groups, and wherein the acid groups have been reacted with the reactive groups [and wherein the acid groups in the acrylic resin have been reacted with the epoxy resin, resulting in binding (or attachment) of the acrylic resin to the epoxy resin].
[3] The composition according to the above [1] or [2], wherein the alicyclic epoxy resin comprises an alicyclic epoxy resin having an epoxycycloalkane skeleton.
[4] The composition according to any one of the above [1] to [3], wherein the alicyclic epoxy resin comprises an epoxycycloalkylalkyl-epoxycycloalkane carboxylate [or an (epoxycycloalkyl)alkyl-epoxycycloalkane carboxylate].
[5] The composition according to any one of the above [1] to [4], wherein the acrylic resin is in the form of acrylic resin particles having an average particle size of 50 to 500 nm.
[6] The composition according to any one of the above [1] to [5], wherein the amount of the acrylic resin is 5 to 50 parts by mass relative to 100 parts by mass of the combined amount of the acrylic resin and the epoxy resin.
[7] The composition according to any one of the above [1] to [6], wherein the composition has a viscosity of 40000 mPa·s or less as measured with a type-B viscometer at 25°C.
[8] A method for producing a composition, the method comprising the step of mixing an acrylic resin and an epoxy resin comprising an alicyclic epoxy resin.
[9] The method according to the above [8], wherein the acrylic resin has acid groups.

[10] The method according to the above [8] or [9], wherein the acrylic resin has an acid value of 0.5 to 10 mg KOH/g.

[11] The method according to any one of the above [8] to [10], wherein the acrylic resin is in the form of acrylic emulsion particles.

[12] The method according to the above [11], wherein the acrylic emulsion particles are composed of an emulsifier and an acrylic polymer, wherein the emulsifier has acid groups, and wherein the acrylic polymer has reactive groups for reacting with the acid groups.

[13] The method according to the above [12], wherein the emulsifier has an acid value of 200 mg KOH/g or more.

[14] The method according to the above [12] or [13], wherein the emulsifier has units derived from an acid group-containing monomer.

[15] The method according to any one of the above [12] to [14], wherein the emulsifier is obtainable by polymerization (e.g., polymerization of a polymerizable component including an acid group-containing monomer) using an alkyl mercaptan having 6 or more carbon atoms (an alkyl mercaptan having 6 or more carbon atoms as a chain transfer agent).

[16] The method according to any one of the above [8] to [15], wherein in the mixing step, the acrylic resin emulsion particles and the epoxy resin are mixed in a solvent, and the solvent is then removed.

[17] The method according to any one of the above [7] to [16], wherein the mixing step is followed by a high-pressure homogenization treatment.

[18] The composition according to any one of the above [1] to [7] (or a curable composition (a second composition) containing the composition), wherein the composition is for paints [or a paint containing the composition according to any one of the above [1] to [7] (or a curable composition (a second composition) containing the composition)].

[19] The composition according to any one of the above [1] to [7] (or a curable composition (a second composition) containing the composition), wherein the composition is for adhesives [or an adhesive containing the composition according to any one of the above [1] to [7] (or a curable composition (a second composition) containing the composition)].

[20] A cured product of the composition according to any one of the above [1] to [7] and [18] and [19].

ADVANTAGEOUS EFFECTS OF INVENTION

In the present invention, a novel composition is provided.

The composition comprises an acrylic resin and an epoxy resin. In the composition, these resins exert their functions (or the epoxy resin is modified with the acrylic resin).

In another aspect of the present invention, a composition that is advantageous in terms of workability is provided. The composition has a relatively low viscosity, even though it comprises an acrylic resin and an epoxy resin. Such a low-viscosity composition is advantageous in terms of workability (handling) and is preferably used in applications that take advantage of its low viscosity (molding). For example, when an epoxy resin is used as a resin component of fiber-reinforced resins, the use of such a composition (epoxy resin composition) can ensure easy molding to facilitate the production of fiber-reinforced resins. Such fiber-reinforced resins (fiber-reinforced composites) are used in various applications and fields, for example, in automobiles, aircraft, and other general industrial fields. The compositions of other aspects of the present invention can also be used in these applications and fields.

In another aspect of the present invention, a highly transparent composition (and a cured product thereof) is provided. Such a highly transparent composition is advantageous in terms of visibility and design. Furthermore, homogeneous mixing of an acrylic resin and an epoxy resin is achieved. Such homogeneous mixing can result in efficient functioning of these resins [e.g., ensuring the uniformity of physical properties (less variation in physical properties) of the composition or a cured product thereof].

In another aspect of the present invention, a composition in which modification with an acrylic resin is efficiently achieved (the functions of the acrylic resin are efficiently imparted) is provided. As described above, the present invention provides a composition having a low viscosity and/or high transparency, which enables a larger amount of the acrylic resin in the composition, resulting in a sufficient functioning of the acrylic resin (e.g., contributing to excellent toughness). Such a composition can also be expected to have high adhesive strength and impact resistance, and for example, is suitable for use as a structural adhesive in automobiles, aircraft, ships, etc.

In another aspect of the present invention, a less-colored composition (and a cured product thereof) is provided. According to the present inventors' studies, some types of epoxy resins (and their combination with acrylic resins) may cause coloration, but the present invention provides a relatively less-colored composition (a composition with an improvement in the extent of coloration).

DESCRIPTION OF EMBODIMENTS

The composition (resin composition, epoxy resin composition) at least comprises an acrylic resin and an epoxy

resin (epoxy compound).

Acrylic resin

The acrylic resin is not particularly limited, and may be (substantially) free of acid groups or may have acid groups.
Example of the acid group include a carboxyl group, an acid anhydride group, and a sulfonic acid group (sulfuric acid group).
The acrylic polymer may have a single kind of acid group or a combination of two or more kinds of acid groups.
Atypical acid group is a carboxyl group. The acid group may form a salt (carboxylic acid salt).
The acid group may be incorporated (included) in the acrylic resin in any manner, and the form of incorporation is not particularly limited. Typically, the acid group may be derived from a monomer having an acid group (acid group-containing monomer).
Examples of the acid group-containing monomer include monomers containing a carboxyl group or an acid anhydride group [e.g., unsaturated monocarboxylic acids (e.g., aliphatic unsaturated monocarboxylic acids such as acrylic acid, methacrylic acid, and crotonic acid), unsaturated polycarboxylic acids (e.g., aliphatic unsaturated dicarboxylic acids such as maleic acid, fumaric acid, and itaconic acid) or partial esters thereof (e.g., monoesters (half esters) of dicarboxylic acids), and anhydrides of these acids (e.g., maleic anhydride)] and sulfonic acid group-containing monomers [e.g., styrene monomers (e.g., styrenesulfonic acid), (meth)acrylic acid sulfoalkyl esters (e.g., 2-sulfoethyl (meth)acrylate), and alkenyl sulfonic acids (e.g., vinyl sulfonic acid)].
Typical examples of the acid group-containing monomer include acrylic acid and methacrylic acid.
A single kind of acid group-containing monomer or a combination of two or more kinds of acid group-containing monomers may be used.
The acid group has only to be present in the acrylic resin. That is, the acid group may be present in a constituent polymer (acrylic polymer, main polymer, base polymer) in the acrylic resin, or in another constituent [e.g., an emulsifier that constitutes an emulsion (an emulsion form of an acrylic resin, an acrylic emulsion) as described later] besides the acrylic polymer in the acrylic resin, or in both of them.
Similarly, the acid group-containing monomer has only to be a source material (polymerizable component) of the acrylic resin. That is, the acid group-containing monomer may be, for example, a polymerizable component of the acrylic polymer, or a polymerizable component of another constituent (e.g., an emulsifier) besides the acrylic polymer in the acrylic resin, or both of the polymerizable components.
When the acrylic resin has acid groups, the acid value of the acrylic resin may be, for example, about 0.1 mg KOH/g or more, preferably about 0.5 mg KOH/g or more, and more preferably about 1 mg KOH/g or more (e.g., 2 mg KOH/g or more).
In addition, the acid value of the acrylic resin may be, for example, about 20 mg KOH/g or less, preferably about 15 mg KOH/g or less, and more preferably about 10 mg KOH/g or less (e.g., 8 mg KOH/g or less).
These ranges (upper and lower limits) may be combined to set a range (e.g., 0.1 to 10 mg KOH/g, or 0.5 to 15 mg KOH/g) for the acid value of the acrylic resin (hereinafter the same applies for the description of ranges).
The acid value can be measured (determined), for example, according to JIS K 0070-1992. The measurement device is not particularly limited and, for example, an automatic titrator (COM-1700AS, Hiranuma Co., Ltd.) may be used (the same applies hereinafter).
The acrylic resin having acid groups as described above can more efficiently exert its functions in the composition (property alteration of an alicyclic epoxy resin when used in combination with the alicyclic epoxy resin).
Particularly, when the acrylic resin has groups capable of reacting with the acid groups, as described later, the acid groups can react with such reactive groups, advantageously resulting in improvement in the dispersion stability of the acrylic resin in the composition and in the toughness of a cured product of the composition.
In addition, appropriate selection or adjustment of the amount of the acid group in the acrylic resin can ensure excellent workability (e.g., lower viscosity) of the composition. Therefore, the workability of the composition and the function of the acrylic resin (property alteration of an alicyclic epoxy resin) can be efficiently achieved at the same time.
At least some of the acid groups (or acid group-containing monomers) may have been reacted with (be bound to) an alicyclic epoxy resin (some of the epoxy groups of the alicyclic epoxy resin) in the composition.
The acrylic resin may have groups capable of reacting with the acid groups (reactive groups for reacting with the acid groups, acid group-reactive groups) or may be (substantially) free of such reactive groups. The reactive group may be incorporated (included) in the acrylic resin in any manner, and the form of incorporation is not particularly limited. Typically, the reactive group may be derived from a monomer having a group capable of reacting with the acid group (such as a carboxyl group) (acid group-reactive monomer, acid group-binding monomer).
Examples of the acid group-reactive monomer (a monomer having a reactive group for reacting with the acid group) include epoxy group-containing monomers [e.g., glycidyl (meth)acrylates and glycidyloxyalkyl (meth)acrylates (e.g., glycidyloxy $C_{2-4}$ alkyl (meth)acrylates such as 2-glycidyloxyethyl (meth)acrylate)], oxazoline group-containing monomers [e.g., alkenyloxazolines (e.g., $C_{2-6}$ alkenyloxazolines such as 2-vinyl-2-oxazoline and 2-isopropenyl-2-oxazoline) and alkenyl-alkyloxazolines (e.g., $C_{2-6}$ alkenyl-$C_{1-10}$ alkyl oxazolines such as 2-vinyl-4-methyl-2-oxazoline, 2-vinyl-5 methyl-2-oxazoline, 2-isopropenyl-4-methyl-2-oxazoline, and 2-isopropenyl-5-ethyl-2-oxazoline], and aziridinyl group-containing monomers [e.g., aziridinyl group-containing (meth)acrylates such as (meth)acryloyloxyethylaziridine].

Typical examples of the acid group-reactive monomer include epoxy group-containing monomers. Among the epoxy group-containing monomers, glycidyl (meth)acrylates are preferred in terms of reactivity.

A single kind of acid group-reactive monomer or a combination of two or more kinds of acid group-reactive monomers may be used.

The reactive group for reacting with the acid group has only to be present in the acrylic resin. That is, the reactive group for reacting with the acid group may be present in the acrylic polymer, or in another constituent (e.g., an emulsifier) besides the acrylic polymer in the acrylic resin, or in both of them.

Similarly, the acid group-reactive monomer has only to be a source material (polymerizable component) of the acrylic resin. That is, the acid group-reactive monomer may be, for example, a polymerizable component of the acrylic polymer, or a polymerizable component of another constituent (e.g., an emulsifier) besides the acrylic polymer in the acrylic resin, or both of the polymerizable components.

When the acrylic resin has acid groups and reactive groups for reacting with the acid groups, at least some of the reactive groups for reacting with the acid groups (or at least some of the acid group-reactive monomers) may have been reacted with (be bound to) some of the acid groups (or acid group-containing monomers) of the acrylic resin in the composition.

A typical example of the acrylic resin is an acrylic emulsion (an emulsion form of an acrylic resin) which comprises an acrylic polymer having either acid groups or reactive groups for reacting with the acid groups (e.g., reactive groups for reacting with the acid groups) and an emulsifier having the other of the two kinds of groups (e.g., acid groups).

In such an acrylic emulsion, at least some of the acid groups (e.g., the acid groups in the emulsifier) may have been reacted with (be bound to) some of the reactive groups for reacting with the acid groups (e.g., the reactive groups for reacting with the acid groups in the acrylic polymer).

Specific examples of the acrylic resin will be described below.

The acrylic resin at least comprises an acrylic polymer [acrylic polymer as a polymer component]. The acrylic polymer (acrylic resin) may be a rubber (acrylic rubber).

The acrylic polymer [polymer component (base polymer) of the acrylic resin] usually has (meth)acrylate-derived structural units (hereinafter referred to as (meth)acrylate units, etc.; the same applies hereinafter) (or the acrylic polymer usually has a (meth)acrylate as a polymerizable component).

Examples of the (meth)acrylate [acrylate without a functional group (a reactive group such as a hydroxy group, an acid group, or an epoxy group), monofunctional methacrylate without a functional group (monofunctional (meth)acrylate)] include aliphatic (meth)acrylates and aromatic (meth)acrylates.

Examples of the aliphatic (meth)acrylate include chain aliphatic (meth)acrylates {straight- or branched-chain aliphatic (meth)acrylates such as alkyl (meth)acrylates [e.g., $C_{1-20}$ alkyl (meth)acrylates (e.g., $C_{1-18}$ alkyl (meth)acrylates) such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, sec-butyl (meth)acrylate, amyl (meth)acrylate, hexyl (meth)acrylate, 2-ethylhexyl (meth)acrylate, n-octyl (meth)acrylate, nonyl (meth)acrylate, decyl (meth)acrylate, dodecyl (meth)acrylate, n-lauryl (meth)acrylate, tridecyl (meth)acrylate, and stearyl (meth)acrylate] and alkoxyalkyl (meth)acrylates [e.g., alkoxyalkyl (meth)acrylates (e.g., $C_{1-12}$ alkoxy $C_{1-12}$ alkyl methacrylates such as 2-methoxyethyl (meth)acrylate, 2-ethoxyethyl (meth)acrylate, 2-propoxyethyl (meth)acrylate, 2-butoxyethyl (meth)acrylate, 3-methoxypropyl (meth)acrylate, and 4-methoxybutyl (meth)acrylate)]} and alicyclic (meth)acrylates [e.g., cycloalkyl (meth)acrylates (e.g., $C_{4-20}$ cycloalkyl (meth)acrylates, preferably $C_{4-10}$ cycloalkyl (meth)acrylates, such as cyclohexyl (meth)acrylate), cycloalkylalkyl (meth)acrylates (e.g., $C_{4-10}$ cycloalkyl $C_{1-4}$ alkyl (meth)acrylates such as cyclohexylmethyl (meth)acrylate, cyclohexylethyl (meth)acrylate, cyclohexylpropyl (meth)acrylate, and 4-methylcyclohexylmethyl (meth)acrylate), and crosslinked cyclic (meth)acrylates (e.g., isobornyl (meth)acrylate and adamantyl (meth)acrylate)].

Examples of the aromatic (meth)acrylate (aromatic ring-containing (meth)acrylate) include aryl (meth)acrylates (e.g., $C_{6-10}$ aryl (meth)acrylates such as phenyl (meth)acrylate), aralkyl (meth)acrylates (e.g., $C_{6-10}$ aryl $C_{1-4}$ alkyl (meth)acrylates such as benzyl (meth)acrylate and phenethyl (meth)acrylate), and aryloxyalkyl methacrylates (e.g., $C_{6-10}$ aryloxy $C_{1-4}$ alkyl methacrylates such as phenoxyethyl methacrylate).

Among these, aliphatic (meth)acrylates [e.g., alkyl acrylates (e.g., $C_{1-18}$ alkyl acrylates such as ethyl acrylate and butyl acrylate), alkyl methacrylates (e.g., $C_{1-18}$ alkyl methacrylates such as methyl methacrylate), and alkoxyalkyl (meth)acrylates], particularly aliphatic acrylates (e.g., ethyl acrylate, butyl acrylate, 2-methoxyethyl acrylate, and 2-ethoxyethyl acrylate) are preferred. Ethyl acrylate, butyl acrylate, and methyl methacrylate are more preferred because they offer toughness improvement and other advantages.

For this purpose, the acrylic polymer may at least have aliphatic (meth)acrylate units (particularly, aliphatic acrylate units).

When the acrylic polymer (acrylic resin) has aliphatic (meth)acrylate units, the amount of the aliphatic (meth)acrylate unit in the acrylic polymer (acrylic resin) [or the amount of the aliphatic (meth)acrylate in the polymerizable components of the acrylic polymer (acrylic resin)] may be, for example, 50 mass% or more, preferably 60 mass% or more, more preferably 70 mass% or more, or may be even 80 mass% or more (e.g., 85 mass% or more).

When the acrylic polymer (acrylic resin) has aliphatic acrylate units, the amount of the aliphatic acrylate unit in the acrylic polymer (acrylic resin) [or the amount of the aliphatic acrylate in the polymerizable components of the acrylic polymer (acrylic resin)] may be, for example, 30 mass% or more, preferably 40 mass% or more, more preferably 50 mass% or more (e.g., 55 mass% or more), or may be 60 mass% or more (e.g., 65 mass% or more, 70 mass% or more, or 75 mass% or more).

When the acrylic polymer (acrylic resin) has aromatic (meth)acrylate units, the amount of the aromatic acrylate unit in the acrylic polymer (acrylic resin) [or the amount of the aromatic acrylate in the polymerizable components of the acrylic polymer (acrylic resin)] may be, for example, 50 mass% or less, preferably 40 mass% or less, more preferably 30 mass% or less (e.g., 25 mass% or less), or may be even 20 mass% or less (e.g., 18 mass% or less, 15 mass% or less, 12 mass% or less, 10 mass% or less, 5 mass% or less, or 3 mass% or less).

The acrylic polymer (acrylic resin) may have structural units derived from an additional monomer [a monomer other than the above-described (meth)acrylate], i.e., additional monomer units (or the acrylic polymer may have an additional monomer as a polymerizable component).

Examples of the additional monomer include monomers having a functional group (functional group-containing monomers), multifunctional monomers, styrene monomers [or aromatic vinyl monomers, e.g., styrene, α-alkylstyrene (e.g., α-$C_{1-4}$ alkylstyrene such as α-methylstyrene), alkylstyrene (e.g., $C_{1-4}$ alkylstyrene such as vinyltoluene), halostyrene (e.g., chlorostyrene), and haloalkylstyrene (e.g., chloromethylstyrene)], vinylester monomers [e.g., fatty acid vinyl esters (e.g., $C_{1-10}$ fatty acid vinyl esters and $C_{2-6}$ fatty acid vinyl esters) such as vinyl acetate and vinyl propionate], vinylether monomers (e.g., alkyl vinyl ethers such as methyl vinyl ether and ethyl vinyl ether), olefinic monomers [e.g., alkenes (e.g., $C_{2-10}$ alkenes such as ethylene, propylene, 1-butene, isobutylene, and 1-octene)], halogen-containing monomers [e.g., halo $C_{2-10}$ alkenes such as vinyl chloride, vinylidene chloride, and vinyl fluoride; and haloalkyl vinyl ethers (e.g., halo $C_{1-10}$ alkyl vinyl ethers) such as chloroethyl vinyl ether], unsaturated nitriles (e.g., (meth)acrylonitrile), amide monomers {e.g., (meth)acrylamide and N-substituted (meth)acrylamide [e.g., N-alkyl (meth)acrylamide (e.g., N-mono-$C_{1-4}$ alkyl (meth)acrylamide such as N-monomethyl (meth)acrylamide and N-monoethyl (meth)acrylamide; N,N-di-$C_{1-4}$ alkyl (meth)acrylamide such as N,N-dimethyl (meth)acrylamide; and N,N-dimethylaminopropyl (meth)acrylamide)]}, nitrogen-containing (meth)acrylates {e.g., N-substituted aminoalkyl (meth)acrylates [e.g., N,N-di-$C_{1-4}$ alkylamino $C_{2-4}$ alkyl (meth)acrylates such as dimethylaminoethyl (meth)acrylate and diethylaminoethyl (meth)acrylate]}, and lactam monomers (e.g., N-vinylpyrrolidone).

Examples of the functional group-containing monomer include hydroxy group-containing monomers {e.g., hydroxy group-containing (meth)acrylates such as hydroxyalkyl (meth)acrylates [e.g., hydroxy $C_{2-10}$ alkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, and 2-hydroxy-3-phenoxypropyl (meth)acrylate], polyalkylene glycol mono(meth)acrylates [e.g., poly($C_{2-4}$ alkanediol) mono(meth)acrylates such as diethylene glycol mono(meth)acrylate, poly(ethylene glycol) mono(meth)acrylate, and polypropylene glycol) mono(meth)acrylate], and mono(meth)acrylates of polyols having three or more hydroxy groups [e.g., mono(meth)acrylates of tri- and hexa-hydroxy $C_{3-10}$ polyols, such as glycerol mono(meth)acrylate]}, acid group-containing monomers [e.g., those listed above (e.g., acrylic acid and methacrylic acid)], and monomers having a group capable of reacting with an acid group (e.g., a carboxyl group) (or monomers having a reactive group for reacting with an acid group or acid group-reactive monomers; e.g., those listed above such as epoxy group-containing monomers, oxazoline group-containing monomers, and aziridinyl group-containing monomers).

Examples of the multifunctional monomer include multifunctional (meth)acrylates {e.g., poly(meth)acrylates of polyols [or polyhydric alcohols such as diols (e.g., alkanediols such as ethylene glycol, propylene glycol, 1,3-butylene glycol, 1,6-hexanediol, and neopentyl glycol, polyethylene glycol, polypropylene glycol, etc.) and polyols having three or more hydroxy groups (e.g., glycerol, trimethylolpropane, diglycerol, pentaerythritol, etc.)]}, alkenyl (meth)acrylates (e.g., allyl (meth)acrylates), divinylbenzene, and diallyl phthalates.

The acrylic polymer having a structure derived from a multifunctional monomer is more advantageous because this contributes to improvement in the toughness of a cured product of the composition.

Among the multifunctional monomers, alkenyl (meth)acrylates (e.g., allyl (meth)acrylates) are suitable because they offer toughness improvement and other advantages.

When the acrylic polymer has multifunctional monomer units, the amount of the multifunctional monomer unit in the acrylic polymer (acrylic resin) [or the amount of the multifunctional monomer in the polymerizable components of the acrylic polymer (acrylic resin)] may be, for example, 0.01 mass% or more (e.g., 0.05 mass% or more), preferably 0.1 mass% or more (e.g., 0.2 mass% or more), and more preferably 0.3 mass% or more (e.g., 0.5 mass% or more, 0.8 mass% or more, 1 mass% or more, 1.2 mass% or more, 1.5 mass% or more, 1.8 mass% or more, 2 mass% or more,

2.5 mass% or more, 3 mass% or more, or 4 mass% or more).

When the acrylic polymer has multifunctional monomer units, the amount of the multifunctional monomer unit in the acrylic polymer (acrylic resin) [or the amount of the multifunctional monomer in the polymerizable components of the acrylic polymer (acrylic resin)] may be, for example, 20 mass% or less, preferably 15 mass% or less, and more preferably 10 mass% or less (e.g., 8 mass% or less, 7 mass% or less, 5 mass% or less, or 3 mass% or less).

A single kind of additional monomer or a combination of two or more kinds of additional monomers may be used.

Typical additional monomers are monomers having a functional group [e.g., acid group-containing monomers and acid group-reactive monomers (epoxy group-containing monomers)], multifunctional monomers, and the like.

That is, the acrylic polymer (acrylic resin) may have at least one type of unit selected from functional group-containing monomer units and multifunctional monomer units. Particularly, the acrylic polymer preferably at least has acid group-reactive monomer units (e.g., epoxy group-containing monomer units), and the emulsifier that constitutes the acrylic resin (acrylic emulsion) preferably has acid groups (or acid group-containing monomer units).

When the acrylic polymer has additional units as described above, the amount of the additional unit in the acrylic polymer (acrylic resin) [or the amount of the additional monomer in the polymerizable components of the acrylic polymer (acrylic resin)] may be, for example, 0.01 mass% or more (e.g., 0.05 mass% or more), preferably 0.1 mass% or more (e.g., 0.2 mass% or more), and more preferably 0.3 mass% or more (e.g., 0.5 mass% or more, 0.8 mass% or more, 1 mass% or more, 1.2 mass% or more, 1.5 mass% or more, 1.8 mass% or more, 2 mass% or more, 2.5 mass% or more, 3 mass% or more, or 4 mass% or more).

When the acrylic polymer has additional units as described above, the amount of the additional unit in the acrylic polymer (acrylic resin) [or the amount of the additional monomer in the polymerizable components of the acrylic polymer (acrylic resin)] may be, for example, 70 mass% or less (e.g., 60 mass% or less, 50 mass% or less, 40 mass% or less, 35 mass% or less, or 30 mass% or less), preferably 25 mass% or less (e.g., 22 mass% or less, or 20 mass% or less), and more preferably 18 mass% or less (e.g., 15 mass% or less, 12 mass% or less, 10 mass% or less, or 8 mass% or less).

When the acrylic polymer has functional group-containing monomer units as described above, the amount of the functional group-containing monomer unit in the acrylic polymer (acrylic resin) [or the amount of the functional group-containing monomer in the polymerizable components of the acrylic polymer (acrylic resin)] may be, for example, 0.01 mass% or more (e.g., 0.05 mass% or more), preferably 0.1 mass% or more (e.g., 0.2 mass% or more), and more preferably 0.3 mass% or more (e.g., 0.5 mass% or more, 0.8 mass% or more, 1 mass% or more, 1.2 mass% or more, 1.5 mass% or more, 1.8 mass% or more, 2 mass% or more, 2.5 mass% or more, or 3 mass% or more).

When the acrylic polymer has functional group-containing monomer units as described above, the amount of the functional group-containing monomer unit in the acrylic polymer (acrylic resin) [or the amount of the functional group-containing monomer in the polymerizable components of the acrylic polymer (acrylic resin)] may be, for example, 50 mass% or less (e.g., 40 mass% or less, 35 mass% or less, or 30 mass% or less), preferably 25 mass% or less (e.g., 22 mass% or less, or 20 mass% or less), and more preferably 18 mass% or less (e.g., 15 mass% or less, 12 mass% or less, 10 mass% or less, or 8 mass% or less).

When the acrylic polymer has acid group-reactive monomer units as described above (e.g., epoxy group-containing monomer units), the amount of the acid group-reactive monomer unit in the acrylic polymer (acrylic resin) [or the amount of the acid group-reactive monomer in the polymerizable components of the acrylic polymer (acrylic resin)] may be, for example, 0.01 mass% or more (e.g., 0.05 mass% or more), preferably 0.1 mass% or more (e.g., 0.2 mass% or more), and more preferably 0.3 mass% or more (e.g., 0.5 mass% or more, 0.8 mass% or more, 1 mass% or more, 1.2 mass% or more, 1.5 mass% or more, 1.8 mass% or more, 2 mass% or more, 2.5 mass% or more, or 3 mass% or more).

When the acrylic polymer has acid group-reactive monomer units as described above (e.g., epoxy group-containing monomer units), the amount of the acid group-reactive monomer unit in the acrylic polymer (acrylic resin) [or the amount of the acid group-reactive monomer in the polymerizable components of the acrylic polymer (acrylic resin)] may be, for example, 40 mass% or less (e.g., 35 mass% or less, or 30 mass% or less), preferably 25 mass% or less (e.g., 22 mass% or less), and more preferably 20% or less (e.g., 18 mass% or less, 15 mass% or less, 12 mass% or less, 10 mass% or less, or 8 mass% or less).

When the acrylic polymer has multifunctional monomer units as described above, the amount of the multifunctional monomer unit in the acrylic polymer (acrylic resin) [or the amount of the multifunctional monomer in the polymerizable components of the acrylic polymer (acrylic resin)] may be, for example, 0.01 mass% or more (e.g., 0.05 mass% or more), preferably 0.1 mass% or more (e.g., 0.2 mass% or more), and more preferably 0.3 mass% or more (e.g., 0.5 mass% or more, 0.8 mass% or more, or 1 mass% or more).

When the amount of the multifunctional monomer unit in the acrylic polymer (acrylic resin) is within the above range, improvement in the toughness of a cured product of the composition can be efficiently achieved.

When the acrylic polymer has multifunctional monomer units as described above, the amount of the multifunctional monomer unit in the acrylic polymer (acrylic resin) [or the amount of the multifunctional monomer in the polymerizable components of the acrylic polymer (acrylic resin)] may be, for example, 20 mass% or less (e.g., 18 mass% or less),

preferably 15 mass% or less (e.g., 12 mass% or less), and more preferably 10 mass% or less (e.g., 8 mass% or less).

The acrylic resin (acrylic polymer) may be in the form of particles (in a particulate form). The acrylic resin in the form of particles (in a particulate form) is preferable because such an acrylic resin can efficiently exert its functions.

In this case, the composition can also be called a composition comprising acrylic resin particles (acrylic polymer particles).

The acrylic polymer (acrylic resin) may be a monolayer (mono-layer, single-layer, monolayered) polymer or a multilayer (multilayered) polymer (e.g., a core-shell polymer), and is particularly a monolayer polymer. Monolayer polymers can be easily produced without special production systems.

The acrylic resin may typically be in the form of particles constituting an emulsion (acrylic emulsion, acrylic resin emulsion), i.e., acrylic emulsion particles. The acrylic emulsion particles are suitable because they are easy to produce.

Such an acrylic resin (acrylic emulsion particles) can be composed, for example, of an acrylic polymer (acrylic polymer particles) and an emulsifier.

Such an emulsion (emulsion particles) is obtained, for example, by polymerization (emulsion polymerization) of a polymerizable component of the acrylic polymer in the presence of the emulsifier, and often has a structure in which the acrylic polymer is coated with the emulsifier (is often composed of the acrylic polymer (particle) and the emulsifier present on the surface (surface layer) of the acrylic polymer).

Examples of the emulsifier (dispersant, surfactant) include anionic emulsifiers, nonionic emulsifiers, cationic emulsifiers (e.g., alkylammonium salts such as decylammonium chloride), and amphoteric emulsifiers (e.g., betaine ester type emulsifiers).

Examples of the anionic emulsifier include alkylsulfate salts such as ammonium dodecylsulfate and sodium dodecylsulfate; alkylsulfonate salts such as ammonium dodecylsulfonate and sodium dodecylsulfonate; alkyl aryl sulfonate salts such as ammonium dodecylbenzene sulfonate and sodium dodecylnaphthalene sulfonate; polyoxyethylene alkyl sulfate salts; polyoxyethylene alkyl aryl sulfonate salts; polyoxyethylene alkyl ether sulfate salts; dialkyl sulfosuccinate salts; arylsulfonic acid-formalin condensates; and fatty acid salts such as ammonium laurate and sodium stearate.

Examples of the nonionic emulsifier include polyoxyethylene alkyl ethers, polyoxyethylene alkyl aryl ethers, condensates of polyethylene glycol and polypropylene glycol, sorbitan fatty acid esters, polyoxyethylene sorbitan fatty acid esters, fatty acid monoglycerides, and condensates of ethylene oxide and aliphatic amines.

The emulsifier may be a polymeric emulsifier (polymer-type emulsifier). Examples of the polymeric emulsifier include anionic emulsifiers (e.g., poly(meth)acrylic acid salts such as sodium polyacrylate), nonionic emulsifiers (e.g., polyvinyl alcohol, polyvinyl pyrrolidone, and polyhydroxyalkyl (meth)acrylates such as polyhydroxyethyl acrylate), and polymers that are made by copolymerizing one or more types of monomers that constitute the foregoing polymers.

The emulsifier may be a reactive emulsifier (an emulsifier having a reactive group). Particularly, the emulsifier may be, for example, an emulsifier having a polymerizable group [e.g., a polymerizable unsaturated bond (such as a double bond or an ethylenically unsaturated bond)] or an emulsifier having a reactive group [e.g., an acid group such as a carboxyl group] for reacting with the functional group [e.g., an acid group-reactive group such as an epoxy group] of the acrylic polymer. Such reactive emulsifiers are suitable because they offer improvement in the physical properties of a cured product of the composition.

Specific examples of the reactive emulsifier include anionic emulsifiers [e.g., propenyl-alkyl sulfosuccinate salts, (meth)acrylic acid polyoxyethylene sulfonate salts, (meth)acrylic acid polyoxyethylene phosphonate salts (e.g., trade name: ELEMINOL RS-30, manufactured by Sanyo Chemical Industries, Ltd.), polyoxyethylene alkylpropenylphenyl ether sulfonate salts (e.g., trade name: AQUALON HS-10, manufactured by DKS Co. Ltd.), sulfonate salts of allyloxymethyl alkyloxypolyoxyethylene (e.g., trade name: AQUALON KH-10, manufactured by DKS Co. Ltd.), sulfonate salts of propenylnonyl phenyloxypolyoxyethylene (e.g., trade name: AQUALON BC-10, manufactured by DKS Co. Ltd.), sulfonate salts of allyloxymethyl nonylphenoxyethyl hydroxypolyoxyethylene (e.g., trade name: ADEKAREASOAP SE-10, manufactured by ADEKA Corporation), allyloxymethyl alkoxyethyl hydroxypolyoxyethylene sulfate salts (e.g., trade name: ADEKAREASOAP SR-10 and SR-30, manufactured by ADEKA Corporation), and bis(polyoxyethylene polycyclic phenyl ether) methacrylated sulfonate salts (e.g., trade name: Antox MS-60, manufactured by NIPPON NYUKAZAI CO., LTD.)] and nonionic emulsifiers [e.g., allyloxymethyl alkoxyethyl hydroxypolyoxyethylene (e.g., trade name: ADEKA REASOAP ER-20, manufactured by ADEKA Corporation), polyoxyethylene alkylpropenylphenyl ether (e.g., trade name: AQUALON RN-20, manufactured by DKS Co. Ltd.), and allyloxymethyl nonylphenoxyethyl hydroxypolyoxyethylene (e.g., trade name: ADEKAREASOAP NE-10, manufactured by ADEKA Corporation)].

Preferable emulsifiers are, for example, emulsifiers having a polymerizable group, such as emulsifiers having a polymerizable unsaturated bond [e.g., an alkenyl group (e.g., a $C_{2-10}$ alkenyl group such as a vinyl group, an allyl group, or a propenyl group)], for example, allyloxymethyl alkoxyethyl hydroxypolyoxyethylene sulfate salts. Such emulsifiers are advantageous in terms of reactivity of the reactive group and water resistance of a cured product of the composition.

Other preferable emulsifiers (reactive emulsifiers) are, for example, polymers (polymeric emulsifiers) having

acid groups. Examples of the acid group include those listed above, particularly a carboxyl group.

Such reactive emulsifiers can be used to incorporate a reactive group (functional group) into the acrylic resin (particles). Particularly when the reactive group is an acid group (e.g., a carboxyl group), the reactive group allows the acrylic resin to react with an alicyclic epoxy resin (and furthermore, the reactive group can react with the acrylic polymer having acid group-reactive groups, if present).

The polymer (emulsifier, polymeric emulsifier) having acid groups will be described below.

The polymer having acid groups is not particularly limited as long as it has acid groups. Particularly, it may be a polymer having acid group-containing monomer units (a polymer having acid group-containing monomer as a polymerizable component).

Examples of the acid group-containing monomer include those listed above (e.g., acrylic acid, methacrylic acid, etc.). A single kind of acid group-containing monomer or a combination of two or more kinds of acid group-containing monomers may be used.

The polymer (emulsifier) having acid groups may usually have units derived from a monomer other than the acid group-containing monomer (an acid group-free monomer).

The acid group-free monomer is not particularly limited and examples include monomers listed above, for example, (meth)acrylates [e.g., alkyl (meth)acrylates (e.g., methyl (meth)acrylate, ethyl (meth)acrylate, butyl (meth)acrylate, and lauryl (meth)acrylate)] and other monomers {e.g., hydroxy group-containing monomers [e.g., 2-hydroxyethyl (meth)acrylate, 2-hydroxypropyl (meth)acrylate, polyethylene glycol mono(meth)acrylate, and polypropylene glycol mono(meth)acrylate], styrene monomers (e.g., styrene, vinyltoluene, $\alpha$-methylstyrene, and chloromethylstyrene), unsaturated nitriles [e.g., (meth)acrylonitrile], and amide monomers [e.g., (meth)acrylamide, N-monomethyl (meth)acrylamide, N-monoethyl (meth)acrylamide, and N,N-dimethyl (meth)acrylamide]}.

When the acid group-free monomer comprises a (meth)acrylate, the (meth)acrylate is preferably an alkyl (meth)acrylate, and more preferably an alkyl (meth)acrylate having an alkyl group of 6 or more carbon atoms (e.g., 6 to 18 carbon atoms).

When the acid group-free monomer comprises a hydroxy group-containing monomer, the hydroxy group-containing monomer is preferably a polyalkylene glycol mono(meth)acrylate such as polyethylene glycol mono(meth)acrylate or polypropylene glycol mono(meth)acrylate. More preferably, the number of repeats of the alkylene glycol (e.g., ethylene glycol and/or propylene glycol) unit in the polyalkylene glycol mono(meth)acrylate is, for example, 2 or more (e.g., 2 to 15, or 2 to 8).

A single kind of acid group-free monomer or a combination of two or more kinds of acid group-free monomers may be used.

The mass ratio of the unit (structure) derived from the acid group-containing monomer to the unit (structure) derived from the acid group-free monomer in the polymer (emulsifier) having acid groups is, preferably 5/95 to 50/50, and more preferably 15/85 to 40/60, for example.

The polymer having acid groups may have a hydrocarbon group [e.g., an alkyl group (e.g., an alkyl group of 6 or more carbon atoms (e.g., 6 to 18 carbon atoms) such as an n-hexyl group, an n-octyl group, an n-dodecyl group, a t-dodecyl group, a cetyl group, or a stearyl group)] because such a polymer is advantageous in terms of its emulsifying activity (surface activity) and other properties.

The position of the hydrocarbon group in the polymer having acid groups is not particularly limited and may be in the main chain, in the side-chain, or at the end of the polymer, particularly at least in the side-chain and/or at the end. The hydrocarbon group may be derived from a chain transfer agent used in the production of the polymer having acid groups.

Examples of the chain transfer agent include chain transfer agents having a hydrocarbon group, such as alkyl mercaptans (e.g., alkyl mercaptans having 6 or more carbon atoms (e.g., 6 to 18 carbon atoms), such as n-hexyl mercaptan, n-octyl mercaptan, n-dodecyl mercaptan, t-dodecyl mercaptan, cetyl mercaptan, and stearyl mercaptan).

The use of such a chain transfer agent having a hydrocarbon group contributes to improvement in polymerization stability in the production of acrylic resin emulsions, improvement in dispersion stability against epoxy resins, and foam suppression in the dehydration step.

The acid value of the polymer (emulsifier) having acid groups may be, for example, 10 mg KOH/g or more, preferably 50 mg KOH/g or more, more preferably 100 mg KOH/g or more, or may be even 200 mg KOH/g or more.

When the acid value is within the above range, improvements such as improvement in the dispersion stability of the acrylic resin in the composition and improvement in the toughness of a cured product of the composition can be efficiently achieved.

The molecular weight of the polymer (emulsifier) having acid groups is not particularly limited, and for example, the number-average molecular weight may be 300 or more (e.g., 300 to 7000, 500 to 6000, or 1000 to 4000).

The molecular weight (number-average molecular weight) can be measured (determined), for example, by GPC (gel permeation chromatography) according to JIS K 7252. The standard sample (standard substance) may be, for example, polystyrene. The measurement device is not particularly limited and, for example, a GPC system (HLC-8320GPC, TOSOH) or the like may be used (the same applies hereinafter).

The polymer (emulsifier) having acid groups may be obtained commercially or synthesized.

In polymerization, some or all of the acid groups of the polymer (emulsifier) having acid groups may be neutralized (form a salt) because such a polymer is advantageous in terms of its emulsifying activity (surface activity) and other properties.

The neutralizer that can be used for this purpose may be one or more selected from the group consisting of alkali metal compounds such as sodium hydroxide and potassium hydroxide; alkaline earth metal compounds such as calcium hydroxide and calcium carbonate; ammonia; and water-soluble organic amines such as monomethylamine, dimethylamine, trimethylamine, monoethylamine, diethylamine, triethylamine, monopropylamine, dimethylpropylamine, monoethanolamine, diethanolamine, triethanolamine, ethylenediamine, and diethylenetriamine. However, in cases where metal ions in a cured product of the composition may cause problems, for example, ammonia or low-boiling amines such as monomethylamine, dimethylamine, and trimethylamine, which can diffuse at room temperature or upon heating, are recommended.

The method for synthesizing (producing) the polymer having acid groups is, for example, polymerization (radical polymerization) of the polymerizable components of the polymer having acid groups {e.g., an acid group-containing monomer (e.g., methacrylic acid or acrylic acid) and an acid group-free monomer [e.g., a (meth)acrylic ester (e.g., lauryl (meth)acrylate) or another monomer (e.g., a hydroxy group-containing monomer such as polyethylene glycol mono(meth)acrylate or polypropylene glycol mono(meth)acrylate)]} in the presence of a polymerization initiator (e.g., an azo compound or a peroxide) and, if necessary, a chain transfer agent (e.g., a chain transfer agent as exemplified above, such as an alkyl mercaptan having 6 or more carbon atoms).

When the chain transfer agent is used, the amount of the chain transfer agent may be, for example, about 2 to 300 parts by mass relative to 100 parts by mass of the polymerizable component. The amount of the polymerizable component may be 1 mole or less (e.g., 0.1 mole or less) relative to 1 mole of the chain transfer agent.

In the acrylic resin (acrylic emulsion particles), the emulsifier may be bound or unbound to the acrylic polymer. The emulsifier is preferably bound to (has been reacted with) the acrylic polymer, but it depends on the type of the emulsifier.

When the emulsifier is bound to the acrylic polymer, the form of binding is not particularly limited. Typically, a reactive emulsifier or the like may be used for binding to the acrylic polymer.

For example, when an emulsifier having a polymerizable group (e.g., an alkenyl group such as an allyl group) is used, the emulsifier having a polymerizable group can be polymerized together with the polymerizable component of the acrylic polymer, resulting in binding of the emulsifier to the acrylic polymer.

Alternatively, when the acrylic polymer (or the polymerizable component thereof) has a functional group (e.g., an acid group-reactive group such as an epoxy group), an emulsifier having a reactive group (e.g., an acid group) capable of reacting with this functional group can be used to react with the polymerizable component of the acrylic polymer (that is, to allow the reactive group of the emulsifier to react with the functional group of the polymerizable component of the acrylic polymer), resulting in binding of the emulsifier to the acrylic polymer.

The amount of the emulsifier in the acrylic resin (acrylic emulsion particles) may be, for example, 0.1 to 20 parts by mass, preferably 0.5 to 10 parts by mass, and more preferably 1 to 5 parts by mass (e.g., 1 to 3 parts by mass) relative to 100 parts by mass of the acrylic polymer (or the polymerizable component of the acrylic polymer).

When the acrylic resin (e.g., acrylic emulsion particles) has acid group-containing monomer units (e.g., acid group-containing monomer units derived from the polymer (emulsifier) having acid groups), the amount of the acid group-containing monomer unit in the acrylic resin (e.g., in the combined amount of the acrylic polymer and the emulsifier) [or the amount of the acid group-containing monomer in the polymerizable components of the acrylic resin (e.g., the acrylic polymer and the emulsifier)] may be, for example, 0.01 mass% or more (e.g., 0.05 mass% or more), preferably 0.1 mass% or more (e.g., 0.15 mass% or more), more preferably 0.2 mass% or more (e.g., 0.25 mass% or more, 0.3 mass% or more, 0.35 mass% or more, 0.4 mass% or more, 0.45 mass% or more, or 0.5 mass% or more), or may be 30 mass% or less (e.g., 25 mass% or less, 20 mass% or less, or 18 mass% or less), preferably 15 mass% or less (e.g., 12 mass% or less, 10 mass% or less, 9 mass% or less, 8 mass% or less, 7 mass% or less, or 6 mass% or less), more preferably 5 mass% or less (e.g., 4 mass% or less, 3 mass% or less, or 2 mass% or less).

When the acrylic resin (or acrylic polymer) has a glass transition temperature, the glass transition temperature may be, for example, 80°C or less, preferably 50°C or less, more preferably 20°C or less, or may be -100°C or more (e.g., -70°C or more, -50°C or more, or -40°C or more).

The glass transition temperature can be determined, for example, by differential scanning calorimetry (e.g., the measurement method according to JIS K 7121).

Alternatively, the glass transition temperature may be calculated, for example, by the Fox formula represented by:

$$1/Tg = \Sigma(Wm/Tgm)/100$$

[wherein Wm represents the amount (mass%) of a monomer m in the monomer components constituting the polymer and Tgm represents the glass transition temperature (absolute temperature: K) of the homopolymer of the monomer m], using the glass transition temperature of the homopolymer of each of the monomer components constituting the acrylic resin.

The acrylic resin may be obtained commercially or produced (synthesized) by a usual method.

For example, the acrylic polymer can be obtained by polymerizing its polymerizable component in a usual manner.

Particularly, the acrylic resin (acrylic resin emulsion) may be obtained by emulsion polymerization of a polymerizable component of the acrylic polymer in the presence of the emulsifier.

The emulsion polymerization can be performed in a solvent. The solvent is usually water or an aqueous solvent (water-based solvent) such as a water-containing solvent [a mixed solvent of water and an alcohol (such as a $C_{1-4}$ alcohol such as methanol or ethanol], and is particularly water.

The polymerization initiator used in the emulsion polymerization is not particularly limited, and commonly used ones can be used. However, in cases where alkali metals, chlorine ions, etc. may adversely affect a cured product of the composition, hydrogen peroxide, peracetic acid, peroxides (e.g., di-t-butyl peroxide), azo compounds [e.g., 4,4'-azobis(4-cyanopentanoic acid)], etc. are suitable.

The emulsion polymerization may be performed in the presence of a chain transfer agent or the like. Other emulsion polymerization conditions (such as temperature and duration) may be selected as appropriate.

The acrylic resin (emulsion particles) obtained by emulsion polymerization is in a dispersed state in the solvent. The solvent may be removed before the preparation of the composition or may be used without removal in the preparation of the composition.

The particle size (average particle size) of the acrylic resin (emulsion particles) is not particularly limited and may be, for example, about 0.01 to 5 μm, about 0.02 to 3 μm, about 0.03 to 1 μm (e.g., 0.05 to 0.8 μm, or 0.07 to 0.6 μm), or about 0.1 to 0.5 μm (e.g., 0.2 to 0.5 μm).

The particle size of the acrylic resin may usually correspond to (reflect) the particle size of the acrylic resin in the composition (modified epoxy resin).

In an emulsion containing a solvent, the non-volatile content [or the solid content or the amount of the acrylic resin (emulsion particles)] is not particularly limited. The non-volatile content may be, for example, 10 mass% or more, preferably 20 mass% or more, more preferably 30 mass% or more, or may be 80 mass% or less, 70 mass% or less, or 60 mass% or less.

## Epoxy resin

The composition of the present invention comprises an alicyclic epoxy resin as the epoxy resin.

### Alicyclic epoxy resin

Examples of the alicyclic epoxy resin [or alicyclic epoxy compound, epoxy resin having an alicyclic skeleton (structure)] include epoxy resins having an epoxycycloalkane skeleton and hydrogenated epoxy resins {e.g., hydrogenated glycidyl ether epoxy resins (hydrogenated aromatic glycidyl ether epoxy resins) [e.g., hydrogenated bisphenol epoxy resins (e.g., hydrogenated bisphenol A epoxy resin and hydrogenated bisphenol F epoxy resin)]}.

Among the alicyclic epoxy resins, epoxy resins having an epoxycycloalkane skeleton are preferred because they contribute to better workability (lower viscosity) and other advantages.

In epoxy resins having an epoxycycloalkane skeleton [olefin (cyclo-olefin) oxidized epoxy resins], examples of the cycloalkane skeleton include a cycloalkane skeleton [or a monocycloalkane skeleton, e.g., a $C_{4-10}$ cycloalkane (e.g., a $C_{5-8}$ cycloalkane) skeleton such as a cyclohexane (cyclohexene oxide) skeleton] and a polycycloalkane skeleton [or a polycyclic (fused polycyclic) cycloalkane skeleton, e.g., a bicycloalkane (e.g., decalin) skeleton or a norbornane skeleton].

Atypical epoxycycloalkane skeleton is an epoxy $C_{4-10}$ cycloalkane skeleton (e.g., an epoxy $C_{5-8}$ cycloalkane skeleton), particularly an epoxycyclohexane (cyclohexene oxide) skeleton. That is, the epoxy resin having an epoxycycloalkane skeleton may at least have an epoxy $C_{4-10}$ cycloalkane skeleton [e.g., an epoxy $C_{5-8}$ cycloalkane skeleton such as an epoxycyclohexane (cyclohexene oxide) skeleton].

The epoxycycloalkane skeleton may have a substituent.

Examples of the substituent include hydrocarbon groups [e.g., alkyl groups (e.g., $C_{1-10}$ alkyl groups such as a methyl group) and alkenyl groups (e.g., a vinyl group)], halogen atoms (e.g., a fluorine atom and a chlorine atom), hydroxy

groups, oxo groups, heteroatom-containing groups [e.g., alkoxy groups (e.g., $C_{1-10}$ alkoxy groups such as a methoxy group), acyl groups (e.g., $C_{1-10}$ acyl groups such as an acetyl group), acyloxy groups (e.g., $C_{1-10}$ acyloxy groups such as an acetoxy group), alkoxycarbonyl groups (e.g., $C_{1-10}$ alkoxycarbonyl groups such as a methoxycarbonyl group), and (meth)acryloxy groups], and groups in which two or more of the same or different groups selected from the foregoing groups are bound together [e.g., (meth)acryloxyalkyl groups (e.g., a (meth)acryloxymethyl group)].

The epoxycycloalkane skeleton may have a single kind of substituent or a combination of two or more kinds of substituents.

The epoxy resin having an epoxycycloalkane skeleton has only to have at least one epoxycycloalkane skeleton, and may have plural (two or more) epoxycycloalkane skeletons.

In the epoxy resin having a skeleton (structure) composed of plural (e.g., two) epoxycycloalkane skeletons bound together, the binding between the plural (e.g., two) epoxycycloalkane skeletons may be a direct binding (single bond), a binding via a linking group (spacer), or any combination of these bindings.

Examples of the linking group include heteroatom-containing groups (e.g., an ether group (-O-), a thioether group (-S-), a carbonyl group (-CO-), an ester group (-COO-), a carbonate group (-OCOO-), and an amide group (-CONH-)), hydrocarbon groups [e.g., alkylene or alkylidene groups (e.g., $C_{1-10}$ alkylene or alkylidene groups such as a methylene group, an ethylene group, a propylene group, an ethylidene group, and an isopropylidene group), cycloalkylene or cycloalkylidene groups (e.g., $C_{4-10}$ cycloalkylene or cycloalkylidene groups such as a cyclohexylene group), and alkenylene groups (e.g., a vinylene group)], and groups in which two or more of the foregoing groups are connected together.

The alicyclic epoxy resin has only to have one or more epoxy groups, and preferably has plural epoxy groups. That is, the alicyclic epoxy resin may at least comprise an alicyclic epoxy resin having plural epoxy groups.

Specific examples of the epoxy resin having an epoxycycloalkane skeleton include epoxycycloalkanes [e.g., epoxy $C_{4-10}$ cycloalkanes such as 1,2-epoxy-4-vinylcyclohexane, 3,4-epoxycyclohexylmethyl (meth)acrylate, and 3,4-epoxycyclohexyl methanol], polyepoxypolycycloalkanes {e.g., dipeoxybicycloalkyls [e.g., diepoxybicycloalkyls (diepoxy-bi-$C_{4-10}$ cycloalkyls such as 3,4,3',4'-diepoxybicyclohexyl)] and dicyclopentadiene diepoxides}, di(epoxycycloalkylalkyl)ethers [e.g., bis(epoxy $C_{4-10}$ cycloalkyl $C_{1-4}$ alkyl)ethers such as bis(3,4-epoxycyclohexylmethyl)ether], di(epoxycycloalkyl)alkanes [e.g., di(epoxy $C_{4-10}$ cycloalkyl) $C_{1-10}$ alkanes such as bis(3,4-epoxycyclohexan-1-yl)methane, 1,2-bis(3,4-epoxycyclohexan-1-yl)ethane, 2,2-bis(3,4-epoxycyclohexan-1-yl)propane, and 1,2-epoxy-1,2-bis(3,4-epoxycyclohexan-1-yl)ethane], epoxycycloalkylalkyl-epoxycycloalkane carboxylates (or (epoxycycloalkyl)alkyl-epoxycycloalkane carboxylates, e.g., epoxy $C_{4-10}$ cycloalkyl $C_{1-4}$ alkyl-epoxy $C_{4-10}$ cycloalkane carboxylates such as 3,4-epoxycyclohexylmethyl-3',4'-epoxycyclohexane carboxylate, 3,4-epoxy-6-methylcyclohexylmethyl-3',4'-epoxy-6'-methylcyclohexane carboxylate, and 4,5-epoxycyclooctylmethyl-4',5'-epoxycyclooctane carboxylate), epoxycycloalkyl esters of alkanedicarboxylic acids [e.g., epoxy $C_{4-10}$ cycloalkyl esters of $C_{2-10}$ alkanedicarboxylic acids, such as bis(3,4-epoxycyclohexyl)adipate], epoxycycloalkylalkyl esters of alkanedicarboxylic acids [e.g., epoxy $C_{4-10}$ cycloalkyl $C_{1-4}$ alkyl esters of $C_{2-10}$ alkanedicarboxylic acids, such as bis(3,4-epoxycyclohexylmethyl)adipate and bis(2-methyl-3,4-epoxycyclohexylmethyl)adipate], di(epoxycycloalkylalkyl)carbonates [e.g., di(epoxy $C_{4-10}$ cycloalkyl $C_{1-4}$ alkyl)carbonates such as di(3,4-epoxycyclohexylmethyl)carbonate], and the compounds represented by the following formula:

[Chem. 1]

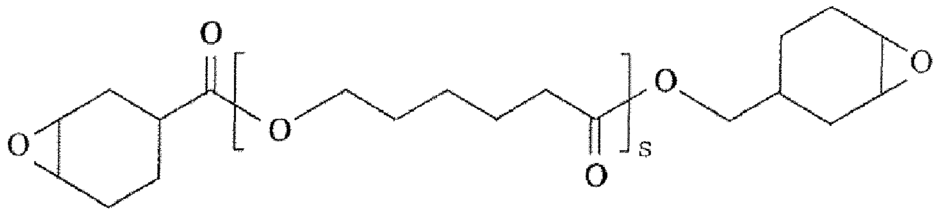

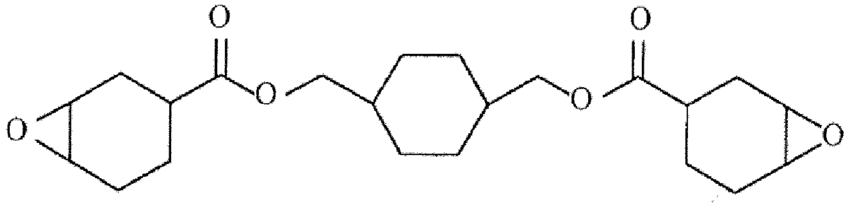

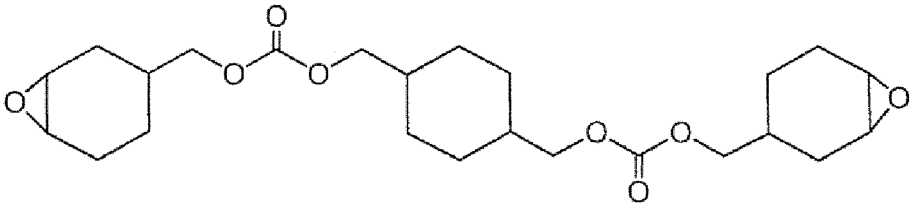

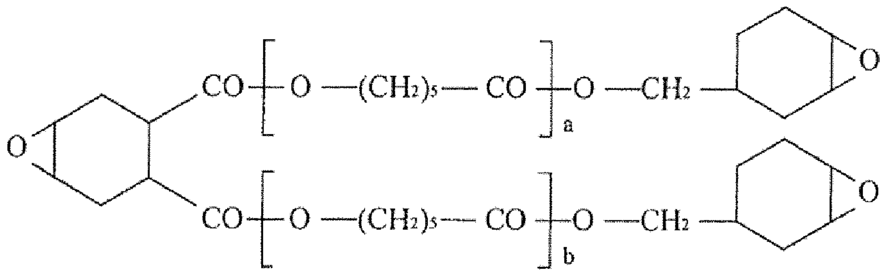

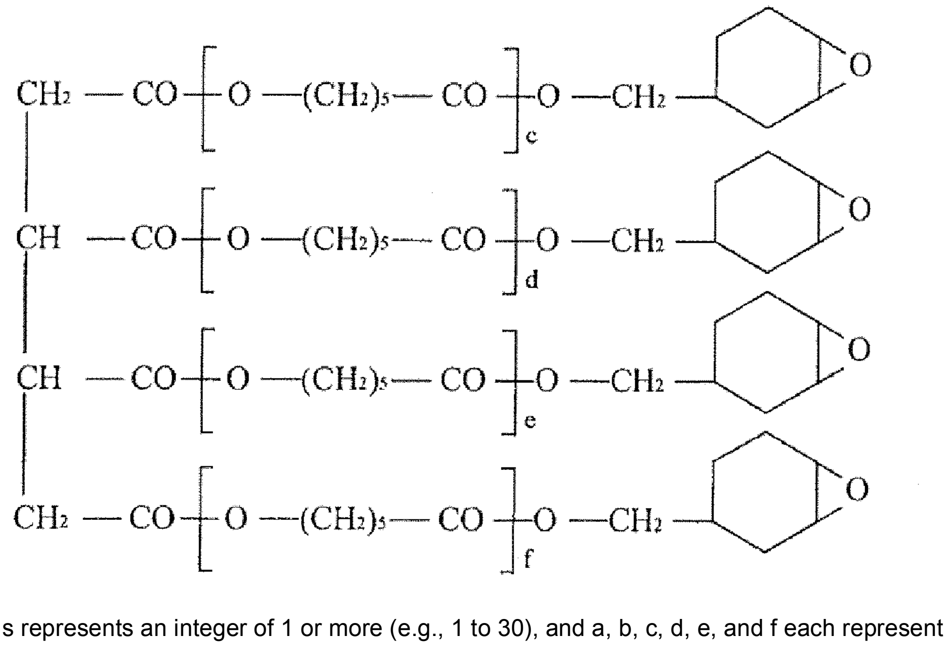

[In the formula, s represents an integer of 1 or more (e.g., 1 to 30), and a, b, c, d, e, and f each represent an integer of 0 or more (e.g., 0 to 30)].

A single kind of alicyclic epoxy resin or a combination of two or more kinds of alicyclic epoxy resins may be used.

In regard to the properties of the alicyclic epoxy resin (alicyclic epoxy compound), the alicyclic epoxy resin may be in a solid, liquid, or some other form at room temperature (e.g., 15 to 30°C) and is particularly in a liquid form.

The viscosity of the alicyclic epoxy resin (a liquid form of the alicyclic epoxy resin) can be selected from a range of, for example, about 1000 mPa·s or less (e.g., 800 Pa·s or less), may be 600 mPa·s or less (e.g., 500 mPa·s or less), preferably 450 mPa·s or less (e.g., 400 mPa·s or less), more preferably 350 mPa·s or less (e.g., 320 mPa·s or less), or may be even 300 mPa·s or less (e.g., 280 mPa·s or less) as measured with a type-B viscometer at 25°C.

The lower limit of the viscosity of the alicyclic epoxy resin (a liquid form of the alicyclic epoxy resin) may be, for example, 1 mPa.s, 2 mPa.s, 5 mPa.s, 10 mPa.s, 20 mPa·s, 30 mPa·s, 50 mPa·s, 100 mPa·s, 150 mPa·s, or 200 mPa·s as measured with a type-B viscometer at 25°C.

Such an alicyclic epoxy resin (a liquid form of the alicyclic epoxy resin) is suitable because it contributes to lower viscosity (better workability) of the composition.

The epoxy equivalent (g/eq) of the alicyclic epoxy resin (e.g., a liquid form of the alicyclic epoxy resin) can be selected according to its type. The epoxy equivalent (g/eq) of the alicyclic epoxy resin may be selected from a range of about 1000 or less (e.g., 800 or less), may be 500 or less (e.g., 400 or less), preferably 300 or less (e.g., 250 or less), more preferably 220 or less (e.g., 200 or less), or may be even 200 or less (e.g., 180 or less, 160 or less, 150 or less, or 140 or less).

Such an alicyclic epoxy resin (a liquid form of the alicyclic epoxy resin) is suitable because of its advantages in terms of the mechanical strength and heat resistance of a cured product of the composition.

The alicyclic epoxy resin may be synthesized by a known method or obtained commercially. Commercially available products include, for example, the CELLOXIDE series (e.g., CELLOXIDE 2021P, CELLOXIDE 8010, etc.) manufactured by Daicel Corporation.

Additional epoxy resin (epoxy compound)

The epoxy resin may consist of (comprise) an alicyclic epoxy resin and optionally an additional epoxy resin (an epoxy resin other than the alicyclic epoxy resin).

Examples of the additional epoxy resin include aliphatic epoxy resins and aromatic epoxy resins.

Examples of the aliphatic epoxy resin (non-alicyclic aliphatic epoxy resin) include glycidyl ethers [e.g., mono- and poly-glycidyl ethers of aliphatic alcohols such as aliphatic monools (e.g., alkanols such as butanol), aliphatic diols (e.g., butanediol, polyethylene glycol, and polypropylene glycol), and aliphatic polyols having three or more hydroxy groups (e.g., glycerol, trimethylol ethane, trimethylol propane, erythritol, pentaerythritol, diglycerol, and dipentaerythritol), such as 1,4-butanediol diglycidyl ether, polyethylene glycol diglycidyl ether, glycerol triglycidyl ether, trimethylol ethane triglycidyl ether, pentaerythritol tetraglycidyl ether, and dipentaerythritol hexaglycidyl ether] and glycidyl esters [e.g., aliphatic carboxylic acid glycidyl esters (e.g., aliphatic monocarboxylic acid glycidyl esters such as glycidyl acetate, glycidyl butyrate, glycidyl laurate, glycidyl palmitate, and glycidyl stearate; and aliphatic polycarboxylic acid glycidyl esters such as diglycidyl adipate, diglycidyl dodecanedioate, and dimer acid glycidyl ester)].

Examples of the aromatic epoxy resin include bisphenol epoxy resins (e.g., bisphenol A epoxy resin, bisphenol F epoxy resin, bisphenol AD epoxy resin, and bisphenol S epoxy resin), novolac epoxy resins (e.g., phenol novolac epoxy resin and cresol novolac epoxy resin), glycidyl ester epoxy resins [e.g., aromatic carboxylic acid glycidyl esters (e.g., benzoic acid glycidyl ester and phthalic acid diglycidyl ester)], and glycidyl amine epoxy resins (e.g., tetraglycidyl diaminodiphenylmethane, triglycidylaminophenol, diglycidylaniline, and diglycidyltoluidine).

A single kind of additional epoxy resin or a combination of two or more kinds of additional epoxy resins may be used.

The amount of the alicyclic epoxy resin in the epoxy resin as a whole may be, for example, 20 mass% or more (e.g., 40 mass% or more), preferably 50 mass% or more (e.g., 60 mass% or more), more preferably 70 mass% or more (e.g., 80 mass% or more, or 90 mass% or more), or may be 95 mass% or more (e.g., 97 mass% or more, or 100 mass%), which means that the epoxy resin substantially consists of the alicyclic epoxy resin.

When the additional epoxy resin is used, the amount of the additional epoxy resin in the combined amount of the alicyclic epoxy resin and the additional epoxy resin (or in the epoxy resin as a whole) may be, for example, 80 mass% or less (e.g., 60 mass% or less), preferably 50 mass% or less (e.g., 40 mass% or less), and more preferably 30 mass% or less (e.g., 20 mass% or less, or 10 mass% or less).

The epoxy resin may be substantially free of aromatic epoxy resins or may comprises only a relatively small amount of an aromatic epoxy resin. For example, the amount of the aromatic epoxy resin in the combined amount of the alicyclic epoxy resin and the additional epoxy resin (or in the epoxy resin as a whole) may be, for example, about 40 mass% or less (e.g., 35 mass% or less), preferably about 30 mass% or less (e.g., 25 mass% or less), and more preferably about 20 mass% or less (e.g., 15 mass% or less, 10 mass% or less, or 5 mass% or less).

In regard to the properties of the epoxy resin, the epoxy resin may be in a solid, liquid, or some other form at room temperature (e.g., 15 to 30°C) and is particularly in a liquid form.

The viscosity of the epoxy resin (a liquid form of the epoxy resin) can be selected from a range of, for example, about 1000 mPa·s or less (e.g., 800 Pa·s or less), may be 600 mPa·s or less (e.g., 500 mPa·s or less), preferably 450

mPa·s or less (e.g., 400 mPa·s or less), more preferably 350 mPa·s or less (e.g., 320 mPa·s or less), or may be even 300 mPa·s or less (e.g., 280 mPa·s or less) as measured with a type-B viscometer at 25°C.

The lower limit of the viscosity of the epoxy resin (a liquid form of the epoxy resin) may be, for example, 1 mPa·s, 2 mPa·s, 5 mPa·s, 10 mPa·s, 20 mPa·s, 30 mPa·s, 50 mPa·s, 100 mPa·s, 150 mPa·s, or 200 mPa·s as measured with a type-B viscometer at 25°C.

The epoxy equivalent (g/eq) of the epoxy resin (e.g., a liquid form of the epoxy resin) can be selected according to its type. The epoxy equivalent (g/eq) of the epoxy resin can be selected from a range of about 1000 or less (e.g., 800 or less), may be 500 or less (e.g., 400 or less), preferably 300 or less (e.g., 250 or less), more preferably 220 or less (e.g., 200 or less), or may be even 200 or less (e.g., 180 or less, 160 or less, 150 or less, or 140 or less).

Modified epoxy resin and composition

The composition of the present invention comprises an acrylic resin and an epoxy resin, as described above.

The form in which the acrylic resin and the epoxy resin are present in the composition is not particularly limited and can be selected according to their quantitative amounts.

Typically, the acrylic resin [particularly, acrylic resin particles (emulsion particles)] is dispersed in the epoxy resin. This form of the composition allows efficient functioning of the acrylic resin (and the epoxy resin).

In some embodiments of the acrylic resin and the epoxy resin, both resins may have been reacted with (be bound to) each other. For example, when the acrylic resin has acid groups [e.g., when the acrylic resin particles (emulsion particles) contain an acid group-containing polymer as an emulsifier], at least some of the acid groups may have been reacted with (be bound to) the epoxy resin (some of the epoxy groups of the epoxy resin).

Typically, the acrylic resin [e.g., acrylic resin particles (acrylic emulsion particles)] may have been reacted with (e.g., be attached to) the epoxy resin, and particularly, the acrylic resin (e.g., the acrylic resin having acid groups) may be dispersed in the epoxy resin in a state where the acrylic resin is bound to (has been reacted with or is attached to) the epoxy resin.

This reaction helps each resin to stably exert its functions.

The reaction (binding) between the acid groups of the emulsifier, which coats the acrylic polymer, and the epoxy resin (and the acrylic polymer) contributes to further improvement in the dispersion stability of the acrylic resin (acrylic polymer) in the composition and further improvement in the toughness of a cured product of the composition.

When the acid groups have been reacted, the reaction rate of the acid group (100% - the percentage of the unreacted acid group (%)) may be, for example, 1% or more (e.g., 5% or more), preferably 10% or more (e.g., 15% or more), more preferably 20% or more (e.g., 30% or more, or 40% or more), or may be 100% or less, 90% or less, 80% or less, 70% or less, or 60% or less.

The acrylic resin and the epoxy resin do not necessarily have to have been reacted with (be bound to) each other. That is, they may be unreacted with (unbound to) each other. When the acrylic resin is unreacted with but uniformly dispersed in the epoxy resin, the acrylic resin can efficiently exert its functions such as improvement in the toughness of the composition. Furthermore, such an unreacted acrylic resin has a higher fluidity, so that it can contribute to lower viscosity of the composition.

The amount of the acrylic resin in the composition can be selected from a range of about 1 part by mass or more relative to 100 parts by mass of the combined amount of the acrylic resin and the epoxy resin, may be, for example, 3 parts by mass or more, preferably 5 parts by mass or more, more preferably 10 parts by mass or more (e.g., 12 parts by mass or more, or 15 parts by mass or more), or may be 20 parts by mass or more (e.g., 25 parts by mass or more, or 30 parts by mass or more).

In the present invention, a relatively low-viscosity (not too viscous) composition (modified epoxy resin) can be efficiently obtained even when a relatively large amount (e.g., 10 parts by mass or more, 15 parts by mass or more, 20 parts by mass or more, 25 parts by mass or more, or 30 parts by mass or more) of the acrylic resin is used.

The amount of the acrylic resin in the composition can be selected from a range of about 80 parts by mass or less (e.g., 70 parts by mass or less) relative to 100 parts by mass of the combined amount of the acrylic resin and the epoxy resin, or may be, for example, 60 parts by mass or less, preferably 50 parts by mass or less (e.g., 45 parts by mass or less), more preferably 40 parts by mass or less (e.g., 38 parts by mass or less).

Such a composition can also be referred to as an epoxy resin containing an acrylic resin. For this reason, the epoxy resin containing an acrylic resin (without additional components) is sometimes referred to as a modified epoxy resin (epoxy resin composition, first composition) and is sometimes described separately from the composition containing an additional component (curable composition, second composition).

In regard to the properties of the composition (or modified epoxy resin), the composition may be in a solid, liquid, or some other form at room temperature (e.g., 15 to 30°C) and is particularly in a liquid form (including a viscous form).

The viscosity of the composition (or modified epoxy resin) can be selected, for example, from a range of about

200000 mPa·s or less (e.g., 150000 mPa·s or less), may be 100000 mPa·s or less (e.g., 80000 mPa·s or less), preferably 60000 mPa·s or less (e.g., 50000 mPa·s or less), more preferably 40000 mPa·s or less (e.g., 35000 mPa·s or less), even 30000 mPa·s or less (e.g., 28000 mPa·s or less), or may be 25000 mPa·s or less (e.g., 22000 mPa·s or less, 20000 mPa·s or less, or 18000 mPa·s or less) as measured with a type-B viscometer at 25°C.

The lower limit of the viscosity of the composition may be, for example, 30 mPa·s, 50 mPa·s, 100 mPa·s, 500 mPa·s, 1000 mPa·s, 3000 mPa·s, 5000 mPa·s, 8000 mPa·s, 10000 mPa·s, or 12000 mPa·s as measured by a type-B viscometer at 25°C.

In the present invention, a relatively low-viscosity composition (or modified epoxy resin) can be efficiently obtained when the acrylic resin and the specific epoxy resin are used in combination. Therefore, such a composition (or modified epoxy resin) has excellent workability. This also enables a relatively high acrylic resin content in the composition, resulting in efficient functioning of the acrylic resin. Therefore, the present invention achieves both workability and high acrylic resin content of the composition, and provides both workability and excellent physical properties (e.g., high toughness) of a cured product of the composition.

The epoxy equivalent (g/eq) of the composition (or modified epoxy resin) can be selected according to its type. The epoxy equivalent (g/eq) of the composition may be selected from a range of about 10000 or less (e.g., 8000 or less), may be 5000 or less (e.g., 4000 or less), preferably 3000 or less (e.g., 2500 or less), more preferably 2000 or less (e.g., 1500 or less), or may be even 1000 or less (e.g., 800 or less, 500 or less, 400 or less, or 300 or less).

The particle size (average particle size) of the acrylic resin (emulsion particles) in the composition (or modified epoxy resin) may be within the range exemplified above, for example, about 0.01 to 5 μm (= 10 to 5000 nm), about 0.02 to 3 μm, about 0.03 to 1 μm (e.g., 0.05 to 0.8 μm, 0.05 to 0.5 μm, or 0.07 to 0.6 μm), or about 0.1 to 0.5 μm (e.g., 0.2 to 0.5 μm).

Such a particle size is further advantageous because it offers further improvement in the properties (e.g., toughness) of a cured product of the composition.

The composition (or modified epoxy resin) of the present invention can be even transparent. In the present invention, although the composition (or modified epoxy resin) comprises a combination of an acrylic resin and an epoxy resin, the composition (or modified epoxy resin) has high transparency [and also a cured product (cured product of the composition) retains such high transparency].

The transparency of the composition (cured product thereof) can be evaluated, for example, based on the measurement according to JIS K 7136 using a haze meter. More specifically, the transparency of the composition (modified epoxy resin) may be evaluated by the method described in the examples below. For example, the transparency of the composition (modified epoxy resin) may be such that the haze (%) of a cured product (cured coat) obtained from the composition by the method described later is 15 or less, preferably 10 or less, and more preferably 5 or less.

The composition (modified epoxy resin) can be relatively stable. The composition is usually transparent (uniformly dispersed), as described above, and can retain such transparency (can be maintained in such a transparent state) over a long period of time without precipitation, turbidity, or the like.

Additional component

The composition of the present invention (curable composition) has only to comprise an acrylic resin and an epoxy resin (or modified epoxy resin)[the second composition may consist only of an acrylic resin and an epoxy resin (or modified epoxy resin or first composition)], but may also comprise an additional component (a component other than the acrylic resin or the epoxy resin), if necessary.

The additional component is not particularly limited and examples include curing agents (curing agents for epoxy resins), modifiers, stabilizers, pigments (including anti-rust pigments), thixotropic agents, dehydrating agents (water adsorbents), colorants, flame retardants, reinforcement materials, dyes, curing accelerators (e.g., tertiary amines such as dimethylbenzylamine), fillers, antioxidants, UV absorbers, surface treatment agents, lubricants, plasticizers, surfactants, antistatic agents, low stress agents, sensitizers, defoamers, leveling agents, and polyol compounds.

A single kind of additional component or a combination of two or more kinds of additional components may be used.

Examples of the curing agent include commonly used curing agents such as acid anhydride curing agents, amine curing agents, polyaminoamide curing agents, imidazole curing agents, organic acid hydrazide curing agents, latent curing agents (such as dicyandiamides), polymercaptan curing agents, phenol curing agents, and cationic polymerization initiators (e.g., photoacid generators).

Specific examples of the curing agent include straight-chain aliphatic amines such as diethylenetriamine, triethylenetetramine, tetraethylenepentamine, and diethylaminopropylamine; various polyamides having different amine values; alicyclic amines such as mensenediamine, isophoronediamine, and bis(4-aminocyclohexyl)methane; aromatic amines such as m-xylenediamine, diaminodiphenylmethane, diaminodiphenylsulfone, and m-phenylenediamine; acid anhydrides such as phthalic anhydride, tetrahydrophthalic anhydride, hexahydrophthalic anhydride, methyl tetrahydrophthalic anhydride, methyl hexahydrophthalic anhydride, methyl-5-norbornene-2,3-dicarboxylic anhydride, dodecyl succinic anhydride, pyromellitic dianhydride, methylcyclohexene tetracarboxylic anhydride, trimellitic anhydride, and poly(azelaic anhydride); phenolic hydroxy group-containing compounds such as phenol novolac and cresol novolac; polymercaptans; anionic polymerization catalysts such as 2,4,6-tris(dimethylaminomethyl)phenol and 2-ethyl-4-methylimidazole; cationic polymerization catalysts such as $BF_3$ monoethylamine complexes; and latent curing agents typified by dicyandiamide, amine adducts, hydrazides, amidoamines, block isocyanates, carbamic acid salts, ketimines, aromatic diazonium salts, guanidine derivatives, triazine derivatives, imidazole compounds, N,N'-dialkyl urea derivatives, and N,N'-dialkyl thiourea derivatives. One of these curing agents or two or more of them may be used.

Examples of the modifier include maleimide compounds such as 4,4'-methylenedianiline bismaleimide.

Examples of the filler include carbonates or sulfates of alkaline earth metals such as calcium carbonate, barium carbonate, magnesium carbonate, calcium sulfate, barium sulfate, and magnesium sulfate, silica, clay, titanium dioxide, kaolin, talc, and aluminum powder. The filler may be a fiber (a fibrous filler). Examples of such a filler (fibrous filler) include glass fiber, carbon fiber, and cellulose nanofiber.

Examples of the stabilizer include metallic soaps (e.g., calcium stearate and aluminum stearate), inorganic acids (e.g., dibasic phosphites and dibasic sulfates), and organometallic compounds (e.g., dibutyltin dilaurate and dibutyltin maleate).

Examples of the anti-rust pigment include chromates (e.g., strontium chromate and barium chromate), basic lead sulfate, and lead cyanamide.

Examples of the thixotropic agent include fine particulate silica, organic bentonite, and ultrafine particulate calcium carbonate.

When moisture is contained in the composition, a relatively small amount of a moisture adsorbent such as calcium oxide powder, magnesium oxide powder, or silica oxide powder can also be included in the composition. In addition, colorants such as carbon black and bengala can be included in the composition as desired.

Examples of the flame retardant include aluminum hydroxide, antimony trioxide, and red phosphorus. Examples of the reinforcement material include woven or nonwoven fabrics or mats made of organic or inorganic fibers such as glass fiber, polyester fiber, polyamide fiber, and alumina fiber, paper, and combinations of these materials.

Examples of the polyol compound include compounds that have two or more hydroxy groups in one molecule and are liquid at room temperature (e.g., 25°C), except for polyether polyols. For example, the polyol compound is at least one polyol selected from polyols, polyester polyols, and polycarbonate polyols each having a main chain consisting of carbon-carbon bonds.

The composition (or modified epoxy resin) of the present invention may be substantially free of such polyol compounds or may comprise only a small amount of the polyol compound [e.g., 5 parts by mass or less (e.g., 3 parts by mass or less, or 1 part by mass or less) relative to 100 parts by mass of the combined amount of the epoxy resin (or alicyclic epoxy resin) and the polyol compound in combination].

## Production method

The method for producing the composition is not particularly limited, and the composition can be produced by mixing the components (through a mixing step).

For example, the composition (or modified epoxy resin) can be produced by mixing the acrylic resin (e.g., acrylic resin particles) and the epoxy resin.

The mixing may be done in the presence of a solvent (e.g., a solvent containing water and the like). For example, when the acrylic resin (acrylic resin particles) is an emulsion containing a dispersion medium (in an emulsion form), this emulsion may be directly mixed with the epoxy resin or may be mixed with the epoxy resin with the addition of a further solvent (e.g., water).

When the mixing is done in the presence of a solvent (e.g., a dispersion medium from the emulsion, a solvent added further, etc.), the solid (non-volatile) content of the mixture (e.g., in the combined amount of the solvent, the acrylic resin, and the epoxy resin) may be, for example, about 1 to 90 mass%, preferably about 10 to 80 mass%, and more preferably about 20 to 70 mass%.

The mixing may be done in any appropriate manner without particular limitation, for example, using a triple roller bar mixer, a kneader mixer, a paddle mixer, a planetary mixer, a disperser mixer, or other kneading machines (mixing machines).

When the mixing has been done in the presence of a solvent, a composition (modified epoxy resin) containing the solvent is obtained. Such a composition may be used as it is or after solvent removal (e.g., dehydration treatment) in various applications.

Particularly, when the acrylic resin and the epoxy resin are reactive with each other (e.g., when the acrylic resin has acid groups), solvent removal facilitates efficient reaction (binding, pre-reaction) between both resins.

The method for solvent removal is not particularly limited and may be, for example, usual vacuum treatment.

The vacuum treatment may be performed under heating (e.g., 50 to 150°C). Heating can promote solvent removal and an efficient reaction between the acrylic resin and the epoxy resin.

In the thus-obtained composition (modified epoxy resin, epoxy resin composition after solvent removal), the amount of the solvent (e.g., water) may be, for example, 5 mass% or less, 3 mass% or less, 1 mass% or less, 0.5 mass% or less, or 0.1 mass% or less.

The composition after mixing (modified epoxy resin, epoxy resin composition after solvent removal) may be subjected to homogenization treatment for efficient dispersion.

The homogenizer used for this treatment may be a high-pressure homogenizer, an ultrasonic homogenizer, a stirring homogenizer, or some other type of homogenizer, and a high-pressure homogenizer is preferably used.

The differential pressure in the high-pressure homogenization treatment may be about 200 to 1500 kg/$cm^2$, and preferably about 350 to 1000 kg/$cm^2$.

When the composition (curable composition) comprises an additional component as exemplified above, the timing when the additional component is mixed with the acrylic resin and the epoxy resin is not particularly limited. The additional component may be mixed with a mixture of the acrylic resin and the epoxy resin (or mixed with the modified epoxy resin); the additional component, the acrylic resin, and the epoxy resin may be mixed together; the additional component may be mixed first with either one of the resin components and then with the other; or any combination of these mixing procedures may be used.

The mixing procedure depends on the type of additional component, but typically the modified epoxy resin is obtained before being mixed with the additional component.

## Applications of the composition

The applications of the composition (modified epoxy resin, curable composition) are not particularly limited and include various applications, such as adhesives, molding materials, paints, sealants, and fiber-reinforced resins (resin component of fiber-reinforced resins).

One aspect of the composition (modified epoxy resin) can have a relatively low viscosity, even though it comprises an acrylic resin and an epoxy resin. Therefore, such a composition has excellent moldability before curing, and is efficiently provided with both moldability and excellent physical properties.

For example, when the composition (modified epoxy resin) is applied to fiber-reinforced resins (when the epoxy resin is used as a resin component of fiber-reinforced resins), the inclusion of the acrylic resin in the composition contributes to efficient production of fiber-reinforced resins with excellent toughness and impact resistance after curing.

The composition of the present invention is curable and can form a cured product. That is, the present invention further includes a cured product of the composition (curable composition). The curing method can be selected according to the type of the curing agent and is not particularly limited. Any usual method can be used.

The present invention is not limited to particular embodiments described above, and various modifications can be made. Combining certain features disclosed in separate embodiments of the present invention can provide further embodiments, which are within the scope of the present invention.

## EXAMPLES

Hereinafter, the present invention will be described in more detail by the examples below, but the present invention is not limited thereto.

In the examples, "part" and "%" refer to part (weight) by mass and a percent by mass unless otherwise specified.

In the examples, analyses were performed as follows.

### Acid value

A precisely weighed 1.5 g of the prepared polymer solution or emulsion was dissolved in a mixed solvent of 90 g of acetone and 10 g of water and titrated with a 0.1 N aqueous KOH solution. Titration was performed using an automatic titrator (trade name: COM-1700AS, Hiranuma Co., Ltd.), and the acid value per gram of the polymer was calculated based on the solid concentration (mg KOH/g).

### Number-average molecular weight

The number-average molecular weight was measured with a GPC system (trade name: HLC-8320GPC, TOSOH) using tetrahydrofuran (THF) as an eluent and a TSKgel SuperHZM-N column (TOSOH) and calculated using a polystyrene standard calibration curve.

Viscosity

The viscosity was measured at 25°C using a type-B viscometer (Toki Sangyo Co., Ltd., TVB-10).

Water content

The water content was measured by the Karl Fischer method (volumetric titration) using a moisture titrator (Kyoto Electronics Manufacturing Co., Ltd., MKH-700).

Transparency

Transparency of the modified epoxy resin was visually evaluated.

Cured product

Haze

To 100 parts of the modified epoxy resin, 75 parts of an acid anhydride curing agent (Hitachi Chemical Co., Ltd., HN-5500) and 0.5 part of dimethylbenzylamine were added, and the mixture was stirred to homogeneity. The mixture was applied onto a 1-mm-thick glass plate with an applicator (4 mils) and heated at 150°C for 16 hours to yield a cured coat (cured product).
The haze of the coat was measured according to JIS K 7136 using a haze meter (NIPPON DENSHOKU INDUSTRIES Co., Ltd., NDH5000).

Du Pont impact test

To 100 parts of the modified epoxy resin, 75 parts of an acid anhydride curing agent (Hitachi Chemical Co., Ltd., HN-5500) and 0.5 part of dimethylbenzylamine were added, and the mixture was stirred to homogeneity. The mixture was applied onto a 1.6-mm-thick steel plate with an applicator (4 mils) and heated at 150°C for 16 hours to yield a cured coat (cured product).
The coat was subjected to the Du Pont impact test according to JIS K 5600-5-3 using a Du Pont impact tester (model: H-50) manufactured by Toyo Seiki Seisaku-sho, Ltd., and the impact resistance of the coat was evaluated according to the following criteria.

A: No cracking or peeling was found in the area of the coat where the weight fell.
B: Cracking and/or peeling was found on part of the area of the coat where the weight fell.
C: Cracking and/or peeling was found on half or more of the area of the coat where the weight fell.

Production of emulsifier

Into a flask equipped with a stirrer, a reflux condenser, a nitrogen inlet tube, a thermometer, and a dropping funnel, 180 parts of isopropyl alcohol were fed. The temperature was raised to 81°C while the flask was purged with nitrogen, and the isopropyl alcohol was refluxed for 10 minutes. Next, a prepared polymerizable monomer mixture of 53.6 parts of acrylic acid, 16.5 parts of lauryl methacrylate, 91 parts of polyethylene glycol monomethacrylate (NOF CORPORATION, Blemmer PE200), 13.7 parts of n-dodecyl mercaptan, and 0.4 part of 2,2'-azobisisobutyronitrile (AIBN) was dropped into the flask over 2 hours. After completion of the dropping, the mixture was aged under reflux conditions for 1 hour to give a solution of a PEG-containing polymer [Pa-1] having a solid content of 49.1%. This polymer [Pa-1] had an acid value of 239 and a number-average molecular weight of 2300.

Production of acrylic resin emulsion 1

Into a flask equipped with a dropping funnel, a stirrer, a nitrogen inlet tube, a thermometer, and a reflux condenser, 63 parts of pure water was fed and heated to 70°C while the flask was gently purged with nitrogen gas. Separately, a mixture of 45 parts of butyl acrylate, 45 parts of ethyl acrylate, 10 parts of methyl methacrylate, 5 parts of glycidyl methacrylate, 4.1 parts of a solution of the PEG-containing polymer [Pa-1] obtained in the above emulsifier production example, 0.5 part of 28% aqueous ammonia, and 36 parts of ion-exchanged water was stirred well to prepare a fully emulsified pre-emulsion. This fully emulsified pre-emulsion was fed into the dropping funnel of the flask.
Next, 8 parts of a 5% aqueous solution of 4,4'-asobis(4-cyanopentanoic acid) neutralized with ammonia was

added to the flask, and then the pre-emulsion was dropped from the dropping funnel over 3 hours and 30 minutes. After completion of the dropping, the dropping funnel was washed with 10 parts of ion-exchanged water to remove any remaining pre-emulsion residue, and the washing solution was added to the flask. During the dropping of the pre-emulsion, the temperature was maintained at 70 to 75°C. After completion of the dropping, the mixture was further stirred at the same temperature for 2 hours for completion of polymerization to give an acrylic resin emulsion 1 having a non-volatile (solid) content of 46.0%.

The acrylic resin emulsion 1 had a viscosity of 20 mPa·s, and the emulsion particles constituting the acrylic resin emulsion 1 had a glass transition temperature of - 8°C and a particle size of 0.22 μm.

The acid value of the emulsion particles was about 3.

Production of acrylic resin emulsion 2

Into a flask equipped with a dropping funnel, a stirrer, a nitrogen inlet tube, a thermometer, and a reflux condenser, 63 parts of pure water was fed and heated to 70°C while the flask was gently purged with nitrogen gas. Separately, a mixture of 50 parts of butyl acrylate, 30 parts of ethyl acrylate, 10 parts of methyl methacrylate, 10 parts of glycidyl methacrylate, 5 parts of allyl methacrylate, 4.1 parts of a solution of the PEG-containing polymer [Pa-1] obtained in the above emulsifier production example, 0.5 part of 28% aqueous ammonia, and 36 parts of ion-exchanged water was stirred well to prepare a fully emulsified pre-emulsion. This fully emulsified pre-emulsion was fed into the dropping funnel of the flask.

Next, 8 parts of a 5% aqueous solution of 4,4'-asobis(4-cyanopentanoic acid) neutralized with ammonia was added to the flask, and then the pre-emulsion was dropped from the dropping funnel over 3 hours and 30 minutes. After completion of the dropping, the dropping funnel was washed with 10 parts of ion-exchanged water to remove any remaining pre-emulsion residue, and the washing solution was added to the flask. During the dropping of the pre-emulsion, the temperature was maintained at 70 to 75°C. After completion of the dropping, the mixture was further stirred at the same temperature for 2 hours for completion of polymerization to give an acrylic resin emulsion 2 having a non-volatile (solid) content of 46.0%.

The acrylic resin emulsion 2 had a viscosity of 17 mPa·s, and the emulsion particles constituting the acrylic resin emulsion 2 had a glass transition temperature of - 28°C and a particle size of 0.3 μm.

The acid value of the emulsion particles was about 3.

Production of acrylic resin emulsion 3

An acrylic emulsion 3 was obtained by the same procedure as in the production of acrylic resin emulsion 2, except that 4.1 parts of an emulsifier having polymerizable unsaturated bonds (ADEKA Corporation, "ADEKAREASOAP SR-20") was used instead of 4.1 parts of a solution of the PEG-containing polymer [Pa-1] and 0.5 part of 28% aqueous ammonia.

The acrylic resin emulsion 3 had a viscosity of 110 mPa·s, and the emulsion particles constituting the acrylic resin emulsion 3 had a glass transition temperature of - 28°C and a particle size of 0.25 μm.

The acid value of the emulsion particles was below the limit of measurement.

Example 1

Into a flask equipped with a stirrer, a nitrogen inlet tube, and a condenser, 76 parts of the acrylic resin emulsion 1 [35 parts of solid content (emulsion particles)] was placed, and ion-exchanged water was added to adjust the non-volatile content to 30%. To this was added 65 parts of 3,4-epoxycyclohexylmethyl-3',4'-epoxycyclohexane carboxylate (Daicel Corporation, CELLOXIDE 2021P, epoxy equivalent: 128 to 133, viscosity (25°C, mPa·s): 220 to 270 (published value), hereinafter referred to as "alicyclic epoxy resin 1"), and the mixture was stirred to give a homogeneous viscous liquid.

The temperature was raised to 70°C, and the pressure was gradually reduced to 50 mmHg for water removal. The mixture was heated to 130°C for complete water removal, and at the same time, the carboxyl groups in the emulsion were pre-reacted with the epoxy resin.

The mixture was treated only once with a nanomizer manufactured by YOSHIDA KIKAI CO., LTD. at a pressure of 50 MPa to give an epoxy resin composition (modified epoxy resin).

Examples 2 to 6 and Comparative Examples 1 to 3

Epoxy resin compositions (modified epoxy resins) were obtained in the same manner as in Example 1, except that the type and amount of acrylic resin emulsion and the type and amount of epoxy resin were changed.

These results are summarized in the table below.

In the table below, alicyclic epoxy resin 2 stands for CELLOXIDE 8010 (Daicel Corporation, epoxy equivalent: 100, viscosity (25°C, mPa·s): 64 (published value)), aromatic epoxy resin 1 stands for bisphenol A epoxy resin (NIPPON STEEL Chemical & Material Co., Ltd., YD-127, epoxy equivalent: 180 to 190 (published value)), and aromatic epoxy resin 2 stands for bisphenol F epoxy resin (NIPPON STEEL Chemical & Material Co., Ltd., YDF-170, epoxy equivalent: 160 to 180 (published value)).

[Table 1]

| | | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|---|
| Acrylic resin emulsion | Emulsion 1 (parts, solid content) | | 35 | - | 20 | 20 | - | - | 15 | 20 | 15 |
| | Emulsion 2 (parts, solid content) | | - | 35 | - | - | - | - | - | - | - |
| | Emulsion 3 (parts, solid content) | | - | - | - | - | 35 | 20 | - | - | - |
| Epoxy resin | Alicyclic epoxy resin 1 (parts) | | 65 | 65 | 80 | - | 65 | 80 | - | - | - |
| | Alicyclic epoxy resin 2 (parts) | | - | - | - | 80 | - | - | - | - | - |
| | Aromatic epoxy resin 1 (parts) | | - | - | - | - | - | - | 85 | - | - |
| | Aromatic epoxy resin 2 (parts) | | - | - | - | - | - | - | - | 80 | 85 |
| Modified epoxy resin | Water content (maximum %) | | 0.05 | 0.05 | 0.05 | 0.05 | 0.05 | 0.05 | 0.05 | 0.05 | 0.05 |
| | Viscosity (mPa·s) | | 15000 | 17000 | 10000 | 7000 | 13000 | 6500 | 85000 | 50000 | 20000 |
| | Transparency (visual evaluation) | | transparent | transparent | transparent | transparent | transparent | transparent | white turbid | white turbid | white turbid |
| | Haze (%) | | 2.2 | 3.1 | 1.5 | 2.6 | 3.3 | 2.4 | 17.7 | 21.1 | 16.1 |
| | Du Pont impact test [punch outer diameter (mm) /weight (g)] | 1.59 /500 | A | A | A | B | A | B | B | B | B |
| | | 3.18 /1000 | A | A | A | A | A | A | B | B | C |

As is clear from the results in the table above, relatively low-viscosity (and transparent) compositions (modified epoxy resins) were obtained by combining an alicyclic epoxy resin with an acrylic resin.

In the combinations of an acrylic resin and an aromatic epoxy resin, the viscosity was inherently relatively high (Comparative Example 1), and even a slightly increased amount of the acrylic resin caused a significant increase in viscosity (thickening) (Comparative Examples 2 and 3). In contrast, the combinations of an acrylic resin and an alicyclic epoxy resin showed a relatively low viscosity even when a relatively large amount of the acrylic resin was used (Examples 1 to 4), and surprisingly, even an increased amount of the acrylic resin did not cause a significant increase in viscosity (thickening) (Examples 2, 3, 5 and 6).

In addition, the modified epoxy resins of the Examples were shown to form cured products that were highly transparent (and even less colored).

Furthermore, the cured products obtained from the modified epoxy resins of the Examples were shown to have excellent resistance to both impact and deformation (impact resistance).

INDUSTRIAL APPLICABILITY

The present invention provides an epoxy resin composition and the like.

## Claims

1. A composition comprising an acrylic resin and an epoxy resin comprising an alicyclic epoxy resin.

2. The composition according to claim 1, wherein the acrylic resin has acid groups and reactive groups for reacting with the acid groups, and wherein the acid groups have been reacted with the reactive groups.

3. The composition according to claim 1 or 2, wherein the alicyclic epoxy resin comprises an alicyclic epoxy resin having an epoxy cycloalkane skeleton.

4. The composition according to any one of claims 1 to 3, wherein the alicyclic epoxy resin comprises an (epoxycycloalkyl)alkyl-epoxycycloalkane carboxylate.

5. The composition according to any one of claims 1 to 4, wherein the acrylic resin is in the form of acrylic resin particles having an average particle size of 50 to 500 nm.

6. The composition according to any one of claims 1 to 5, wherein the composition has a viscosity of 40000 mPa·s or less as measured with a type-B viscometer at 25°C.

7. A method for producing a composition, the method comprising the step of mixing an acrylic resin and an epoxy resin comprising an alicyclic epoxy resin.

8. The method according to claim 7, wherein the acrylic resin has acid groups.

9. The method according to claim 7 or 8, wherein the acrylic resin has an acid value of 0.5 to 10 mg KOH/g.

10. The method according to any one of claims 7 to 9, wherein the acrylic resin is in the form of acrylic emulsion particles.

11. The method according to any one of claims 7 to 10, wherein in the mixing step, the acrylic resin emulsion particles and the epoxy resin are mixed in a solvent, and the solvent is then removed.

12. The method according to any one of claims 7 to 11, wherein the mixing step is followed by a high-pressure homogenization treatment.

13. A cured product of the composition according to any one of claims 1 to 6.

**INTERNATIONAL SEARCH REPORT**

International application No. **PCT/JP2021/027202**

**A. CLASSIFICATION OF SUBJECT MATTER**

***C08G 59/24***(2006.01)i; ***C08L 33/04***(2006.01)i; ***C08L 63/00***(2006.01)i
FI: C08L63/00 A; C08L33/04; C08G59/24

According to International Patent Classification (IPC) or to both national classification and IPC

**B. FIELDS SEARCHED**

Minimum documentation searched (classification system followed by classification symbols)

C08G59/24; C08L33/04; C08L63/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2016-60885 A (TOYO INK SC HOLDINGS CO., LTD.) 25 April 2016 (2016-04-25) claim 1, manufacturing examples 1, 12, tables 1, 2, examples 4-8, 10-13,15-29, table 6, examples 33-37, 39-42, 44-58, table 8, comparative examples 1, 15, 16, table 7, comparative examples 13, table 9, paragraph [0135] | 1-13 |
| X | JP 1-131276 A (KANSAI PAINT CO., LTD.) 24 May 1989 (1989-05-24) claims, p. 9, upper left column, line 6 to right column, line 18, synthesis example of nonaqueous dispersion (a-1), examples 1, 4, 5 | 1-8, 10-13 |
| X | JP 2-627 A (IMPERIAL CHEMICAL INDUSTRIES PLC.) 05 January 1990 (1990-01-05) claims 1, 13, 15, examples 1, 11, 19, table 2, p. 14, upper right column, line 19 to left column, line 7 | 1-8, 10-13 |
| X | WO 2012/096256 A1 (MITSUBISHI RAYON CO., LTD.) 19 July 2012 (2012-07-19) claim 1, 5, examples 1-8, comparative examples 1-4, tables 1-3 | 1-8,12,13 |
| X | JP 2014-232206 A (TOYO INK SC HOLDINGS CO., LTD.) 11 December 2014 (2014-12-11) claim 1, paragraphs [0166], example 16, table 3, paragraph [0199] | 1-4, 6-9, 11-13 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 September 2021** | **05 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2021/027202**

**C. DOCUMENTS CONSIDERED TO BE RELEVANT**

| Category* | Citation of document, with indication, where appropriate, of the relevant passages | Relevant to claim No. |
|---|---|---|
| X | JP 2019-70720 A (NIPPON STEEL CHEMICAL & MATERIAL CO., LTD.) 09 May 2019 (2019-05-09) claim 1, paragraph [0034], synthesis example 1, tables 1-8, paragraph [0054] | 1-4, 6-8, 11-13 |
| X | JP 2019-113590 A (TOYO INK SC HOLDINGS CO., LTD.) 11 July 2019 (2019-07-11) claim 1, 5, examples 22, 23, comparative example 2, tables 3, 4, paragraph [0183] | 1-4, 6-8, 11-13 |
| X | KR 10-2019-0061813 A (DONGWOO FINE CHEMICALS CO., LTD.) 05 June 2019 (2019-06-05) claim 1, synthesis example 1, example 1, table1 | 1-4, 6-8, 11-13 |
| X | JP 2018-112624 A (SANYO CHEMICAL INDUSTRIES, LTD.) 19 July 2018 (2018-07-19) claim 1, manufacturing example 1, examples 1, 2, comparative examples 6, paragraph [0063] | 1-4, 6-8, 11-13 |
| X | KR 10-2018-0078638 A (KOLON INC.) 10 July 2018 (2018-07-10) claim 1, paragraphs [0089], [0101], examples 4-9, table 1 | 1, 3, 4, 6-8,11-13 |
| X | JP 2013-511614 A (ISP INVESTMENTS INC.) 04 April 2013 (2013-04-04) claim 1, paragraph [0049], example 1 | 1, 3, 4, 6, 7, 11-13 |

Form PCT/ISA/210 (second sheet) (January 2015)

**INTERNATIONAL SEARCH REPORT**
**Information on patent family members**

International application No.
**PCT/JP2021/027202**

| Patent document cited in search report | Publication date (day/month/year) | Patent family member(s) | Publication date (day/month/year) |
|---|---|---|---|
| JP 2016-60885 A | 25 April 2016 | (Family: none) | |
| JP 1-131276 A | 24 May 1989 | US 4972027 A<br>claims, column 20, line 17 to column 21, line 36, preparation of nonaqueous dispersion (a-1), examples 1, 4, 5<br>DE 3838748 A<br>KR 10-1989-0008258 A | |
| JP 2-627 A | 05 January 1990 | US 4952456 A<br>claims 1, 13, 15, examples 1, 11, 19, table 2, column 15, lines 34-45<br>EP 321088 A2<br>CN 1033816 A | |
| WO 2012/096256 A1 | 19 July 2012 | US 2013/0289211 A1<br>claim 1, 5, examples 1-8, comparative examples 1-4, tables 1-3<br>EP 2664651 A1<br>CN 103339193 A<br>KR 10-2013-0102108 A<br>TW 201237089 A | |
| JP 2014-232206 A | 11 December 2014 | (Family: none) | |
| JP 2019-70720 A | 09 May 2019 | CN 109634056 A<br>KR 10-2019-0039858 A<br>TW 201915040 A | |
| JP 2019-113590 A | 11 July 2019 | (Family: none) | |
| KR 10-2019-0061813 A | 05 June 2019 | (Family: none) | |
| JP 2018-112624 A | 19 July 2018 | (Family: none) | |
| KR 10-2018-0078638 A | 10 July 2018 | (Family: none) | |
| JP 2013-511614 A | 04 April 2013 | WO 2011/063171 A1<br>claim 1, paragraph [0042], example 1<br>US 2013/0085230 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 014152236 A